# EUROPEAN PATENT APPLICATION

(11) **EP 0 997 177 A2**
(43) Date of publication of application: **03.05.2000**
(21) Application number: 99307959.9
(22) Date of filing: 08.10.1999
(51) Int. Cl.: A63H 30/04

(54) **Information processing apparatus and pseudo biological equipment**

(30) Priority: 30.10.1998 JP 31070198
(71) Applicant: FUJITSU LIMITED, Kawasaki-shi, Kanagawa 211-8588 (JP)
(72) Inventor: Okabayashi, Miwa, Fujitsu Limited, Kawasaki-shi, Kanagawa 211-8588 (JP); Yasukawa, Yusuke, Fujitsu Limited, Kawasaki-shi, Kanagawa 211-8588 (JP)
(74) Representative: Stebbing, Timothy Charles

(57) **Abstract**

Receipt of a message (e.g. an e-mail) by a host device (e.g a PC) causes movement of a doll or toy coupled to the host device. The host device extracts movement data from the message and sends that data (or data derived therefrom) to the doll/toy.

## Description

The present invention relates to an information processing apparatus provided with an information processing equipment such as a personal computer and a home amusement machine, and a pseudo biological equipment connected to such an information processing equipment for performing an operation according to operating data.

Hitherto, as means for representing data in personal computer and the like, data is represented by displaying characters and figures on for example, a display screen, or alternatively data is represented by voice through a speaker. However, the conventional types of data representing means put emphasis on only function, and limited in expression. Particularly, in a system wherein personal computers are coupled with each other, and an electronic mail is transmitted and received between the personal computers, only characters are transmitted. This involves such a problem that it is hard to express one's heart and feelings. In this case, it has become common to use characters (emoticons) to express a picture of a person's face. However, the expression of the picture using characters involves a great restriction, and thus it is difficult to give a sufficient expression.

Recently, personal computers have become popular for home use. Accordingly, there is required not only a functional PC pursuing an enhanced function and a high performance, but also one having a sense of play as well as a practical use.

As a means for satisfying the above-mentioned demands, it is considered that a mascot-like doll is connected to a personal computer and the like. Hitherto, as a similar technology to the above, there is proposed a technology in which a pseudo biological toy modeled on a figure of a human, an animal, etc. is connected via for example, radio to a host computer (Japanese Patent Application Laid Open Gazette Hei.9-322273). However, such a pseudo biological toy is simply a pseudo pet or a toy operated by a computer, but not one having a practical use and a sense of play as well.

Further, there is proposed a doll having a speaker and a microphone, and a photographic camera as well, which doll is connected to a personal computer, wherein the mouth of the doll moves in accordance with an audio output of the speaker for example (Japanese Patent Application Laid Open Gazette Hei.9-185488). This is classified into one having a practical use and a sense of play as well. However, this is simply one wherein the conventional data input and output devices such as a speaker and a microphone are represented in the form of a doll, but has no meaning in movements of the mouth and luminescence of the eyes.

Furthermore, there is proposed an apparatus in which an information processing equipment having a function similar to a personal computer is arranged in its entirety in the form of a doll (Japanese Patent Application Laid Open Gazette Hei.9-222932). This is simply an information processing apparatus formed in the form of a doll in appearance.

In effect, any of the above-mentioned proposals does not propose coordinated movements of a doll and a personal computer or a software to be operated in the personal computer in such a sense that a doll is operated in accordance with a situation of the personal computer and the software, and simply propose an external form of stimulation of a sense of play.

An embodiment of the present invention may provide an information processing apparatus having a pseudo biological equipment connected to an information processing equipment such as a personal computer, a home amusement machine, etc., which is enhanced in a practical use by providing meaning for its operation together with a sense of play, and a pseudo biological equipment having a hardware structure suitable for providing such a function.

The present invention provides, as a first information processing apparatus, an information processing apparatus comprising a main frame equipment having a display unit for displaying a message, and a pseudo biological equipment performing a movement according to movement data, said pseudo biological equipment being connected to said main frame equipment through a cable or a radio,
wherein said message is arranged to include the movement data representative of movements of said pseudo biological equipment, and
said main frame equipment comprises a movement data extracting unit for extracting the movement data from said message, and a movement control unit for transmitting to said pseudo biological equipment the movement data extracted by said movement data extracting unit or movement data prepared in accordance with the extracted movement data.

Here, the pseudo biological equipment implies an equipment having a configuration, which may stimulate a person's sense of play, but not functional ones, for example, dolls or mascots in wide sense including animals, and toys patterned after trains, cars, personal computers, etc. On the other hand, the pseudo biological equipment does not imply functional handlers and equipment, such as a keyboard, a mouse, and a printer, which are generally provided for an information processing apparatus and the like. The term "main frame equipment" refers to any information processing device such as a PC or games machine.

In the above apparatus, movement data representative of movements of the pseudo biological equipment is included in a message, and the message is displayed and the pseudo biological equipment performs a movement according to the movement data. This feature makes it possible to express emotions, which are difficult to expressed by only a display of a message, by translation into a movement of the pseudo biological equipment.

In the first information processing apparatus, it is preferable that said main frame equipment comprises a communication unit for receiving the message permitted to include the movement data transmitted via a network.

The first information processing apparatus is preferable to a system in which a message is displayed upon receipt of the message from another information processing apparatus, for example, a personal computer and an electronic mail.

In the first information processing apparatus, it is acceptable that said message is permitted to include movement data based on a control statement distinguished from display data displayed on said display unit, and
said movement data extracting unit extracts the movement data from said message, and transmits to said display unit display data excepting the extracted movement data.

In this case, in the display unit, there is displayed no information representative of a movement of the pseudo biological equipment, but there is displayed only characters and the like for display, and the pseudo biological equipment performs a movement according to the displayed statement.

In the first information processing apparatus, it is preferable that said message is one in which the movement data is included in display data to be displayed on said display unit, and
said movement data extracting unit extracts the movement data included in the display data, and transmits to said display unit the display data including the extracted movement data.

In the event that the movement data is included into the display data, the specific control statement for movement data becomes unnecessary. Thus, it is possible to include the movement data using the protocol of existing electronic mail or Internet communications as it is. In this case, it is acceptable to associate movement data with characters, for example, 'a', 'e', 'I', 'o', 'u', regardless of meaning of the characters or the words, or alternatively, it is acceptable to associate meanings of the words, for example, 'sad', 'joyful' with movements, for example, 'sorrowful movement', 'joyful movement'.

In the event that a meaning of a word is associated with a movement of the pseudo biological equipment, it is possible for an operator to prepare a message without being aware of a movement of the pseudo biological equipment.

In the first information processing apparatus, it is acceptable that a piece of movement data included in said message is associated with a series of plurality of movements of said pseudo biological equipment, and
said movement data extracting unit extracts the movement data from said message, and produces a series of plurality of movements data representative of a series of plurality of movements of said pseudo biological equipment in accordance with the extracted movement data.

It is acceptable that a message includes movement data associated with one movement of the pseudo biological equipment. In this case, however, in the event that it is intended that the pseudo biological equipment performs a series of plurality of movements, there is a need to arrange a plurality of movement data associated with the series of plurality of movements in the order of the movements. Thus, it may happen that an operation for including the plurality of movement data into the message is troublesome. For this reason, with respect to a typical movement pattern consisting of a series of movements, one item of movement data is associated with the whole series of movements. This feature makes the task of including movement data into a message easy.

In the first information processing apparatus, it is preferable that said pseudo biological equipment has a sensor for detecting an operation of said pseudo biological equipment, and
said communication unit receives the message transmitted via the network, and transmits a response message to the operation of said pseudo biological equipment to the network directed to a sender of the received message.

This feature makes it possible to give notification that a message is received, giving an interest to a party.

In this case, it is acceptable that the pseudo biological equipment has a plurality of sensors responding to mutually different operations and transmits a response message associated with the responding sensor to a sender. Or alternatively, it is acceptable that regardless of the number of sensors, for example, even if one sensor is concerned, a response message is changed in accordance with the number of times of operation such that an operation is made once, or successive two times of operation is made.

In the first information processing apparatus, it is preferable that said pseudo biological equipment has a sensor for detecting an existence of a person before (i.e. in front of) said equipment, and
said communication unit receives the message transmitted via the network, and transmits a response message including a detection result of said sensor to the network directed to a sender of the received message.

This feature makes it possible for a sender to know the presence of a user at the receiving end of the message, and thereby to see whether it is possible to expect to immediately transfer the message to the party.

In the event that the response message is returned to the sender of the message, it is preferable that said communication unit transmits a response message including movement data instructing movements of said pseudo biological equipment to the network directed to the sender.

In the event that the sender of a message is provided with the pseudo biological equipment, it is possible to see through its movement that the message is received by the destination.

As a second information processing apparatus of the present invention, there is provided an information processing apparatus comprising: a main frame equipment having a communication unit connected to a network for receiving a message transmitted via the network, and a display unit for displaying a message; and a pseudo biological equipment performing a movement according to movement data, said pseudo biological equipment being connected to said main frame equipment through a cable or a radio,
wherein said main frame equipment comprises a movement control unit responsive to receipt of the message for transmitting the movement data to said pseudo biological equipment (e.g., a doll).

This feature makes it possible to see through movements of the doll that the message is received.

When the message is received, usually, it often happens that this is displayed on the display unit. However, it is troublesome that such a display is interrupted while other work is performed. On the other hand, by informing of it through movements of a doll that the message is received, it is possible to avoid such inconvenience.

It is acceptable that the term "receipt of the message" referred to in the second information processing apparatus implies "receipt of the message by the main frame equipment itself". However, it is not restricted to this interpretation. In a system wherein a message is transferred via, for example, a host computer, the "receipt of the message" includes the "receipt of the message addressed to ones own self (the main frame equipment) by the host computer".

In the second information processing apparatus, it is preferable that said main frame equipment has an association table between senders of received messages and movement data, and
said movement control unit transmits the movement data associated with the sender of the received message to said pseudo biological equipment.

In this case, by movements of the pseudo biological equipment, it is possible to see receipt of a message and a sender of the message as well.

Further, in the second information processing apparatus, it is preferable that said main frame equipment has an association table between priority specified by senders of messages or keywords of the messages and movement data, and
said movement control unit transmits the movement data associated with the priority of the received message to said pseudo biological equipment.

It is noted that "transmits the movement data associated with the priority of the received message to said pseudo biological equipment" includes, as one mode, "transmits no movement data, or transmits movement data representative of no movement or stopping movements".

In the event that movement data associated with the priority of the received message is transmitted to the pseudo biological equipment, it is possible through movements of the pseudo biological equipment to see as to whether the received message is of higher importance, or an emergency, for instance.

As a third information processing apparatus of the present invention, there is provided an information processing apparatus comprising a main frame equipment, and a pseudo biological equipment performing a movement according to movement data, said pseudo biological equipment being connected to said main frame equipment through a cable or a radio,
wherein said pseudo biological equipment has a sensor for detecting an existence of a person before said pseudo biological equipment, and performs different movements in accordance with a detection result of said sensor.

Here, "performs different movements in accordance with a detection result of said sensor" includes, as one mode, performing no movement in accordance with a detection result of said sensor.

In case of the "performs different movements in accordance with a detection result of said sensor", it is acceptable that a detection result of the sensor is transmitted to the main frame equipment, and the main frame equipment transmits data according to the detection result to the pseudo biological equipment (including a mode in which no movement data is transmitted), or alternatively it is acceptable that the main frame equipment transmits the same movement data regardless of a detection result of the sensor to the pseudo biological equipment, while the pseudo biological equipment changes its movements in accordance with a detection result of the sensor in such a manner that for example, the pseudo biological equipment performs movements associated with all movement data transmitted, or performs only movement associated with specified movement data selected from among the movement data transmitted, or does not perform any movement even if movement data is transmitted.

As a fourth information processing apparatus of the present invention, there is provided an information processing apparatus comprising a main frame equipment adapted for executing multimedia software operative in accordance with a predetermined flowchart associated with time elapsed and an event issued from a user, and a pseudo biological equipment performing a movement according to movement data, said pseudo biological equipment being connected to said main frame equipment through a cable or a radio,
wherein said main frame equipment comprises a movement control unit for transmitting to said pseudo biological equipment movement data representative of a movement coordinated with the multimedia software in execution by said main frame equipment.

Here, the "multimedia software" implies software for reproducing and/or displaying sounds and/or still images and dynamic images in accordance with time elapsed and events issued from a user. The details of the multimedia software will be described later.

According to the fourth information processing apparatus, the pseudo biological equipment performs coordinated movements with the main frame equipment wherein the multimedia software is executed. Thus, it is possible to enhance pleasure and effect of the multimedia software.

As a fifth information processing apparatus of the present invention, there is provided an information processing apparatus comprising a main frame equipment adapted for executing a software, and a pseudo biological equipment performing a movement according to movement data, said pseudo biological equipment being connected to said main frame equipment through a cable or a radio,
wherein said pseudo biological equipment has a sensor for detecting an operation of said pseudo biological equipment, and
said main frame equipment has an event issuing unit responsive to an operation of said pseudo biological equipment for issuing a predetermined event to a predetermined program to be executed in said main frame equipment.

According to the fifth information processing apparatus, it is possible to use the sensor input (switch operation and the like) of the pseudo biological equipment as the event input such as a termination of the screen saver, a lock release of a software, a password input, and a termination of run of a program.

In the fifth information processing apparatus, it is preferable that in the event that said pseudo biological equipment is operated while said pseudo biological equipment performs a specific movement, said event issuing unit issues a predetermined event to a predetermined program to be executed in said main frame equipment.

This feature permits only a user, who knows cooperation of movements of the pseudo biological equipment with operations to be applied to the pseudo biological equipment, to input events, and thus, it is suitable for inputting, for example, a password and the like which is inhibited from inputting by third person.

In the fifth information processing apparatus, it is preferable that in the event that said pseudo biological equipment is operated in a specific operation pattern, said event issuing unit issues a predetermined event to a predetermined program to be executed in said main frame equipment.

Here, the "specific operation pattern" may be a rhythm for an operation, for example, in the event that the same operation is repeatedly performed, or may be an operational sequence of a plurality of operations, for example, for a plurality of sensors for detecting a plurality of operation modes, which are provided on the pseudo biological equipment, or alternatively may be a combination of those aspects.

In this manner, an event is issued only when the specific operation pattern is given. This is suitable for input of the event permitted for a specific user who knows the specific operation pattern. Further, according to this aspect, it is possible for a person, who is unfamiliar with a key operation, to readily input events.

As a sixth information processing apparatus of the present invention, there is provided an information processing apparatus comprising a main frame equipment adapted for executing software, and a pseudo biological equipment performing a movement according to movement data, said pseudo biological equipment being connected to said main frame equipment through a cable or a radio,
wherein said pseudo biological equipment has a sensor for detecting an operation of said pseudo biological equipment, and
said main frame equipment has a movement control unit responsive to issue of a predetermined event for transmitting the movement data to said pseudo biological equipment, and an event issuing unit wherein in the event that said pseudo biological equipment is operated while said pseudo biological equipment performs a movement, said event issuing unit issues an event for actuating software associated with a cause of the movement of said pseudo biological equipment.

Usually, in order to issue an event to activate software, there is a need to operate a mouse and click an icon on a display screen. On the contrary, according to the sixth information processing apparatus, even for a user who is unfamiliar with such operations, for example, a mere touch on the pseudo biological equipment in operation may drive software associated with a cause of a movement of the pseudo biological equipment. Thus, it is possible to reduce an operating load of the user.

In the sixth information processing apparatus, it is preferable that priority is applied to events involved in a cause of transmitting movement data to said pseudo biological equipment, and in the event that a plurality of events involved in a cause of transmitting movement data to said pseudo biological equipment are simultaneously or successively issued, said movement control unit transmits movement data associated with a higher priority of event to said pseudo biological equipment.

According to the sixth information processing apparatus, when the pseudo biological equipment is operated in its operation, software associated with a cause of higher priority of operation is activated.

In this manner, in the event that priority is applied, when a plurality of causes operating the pseudo biological equipment occur simultaneously or successively,an urgent or important one is chosen. Thus, an operation of the pseudo biological equipment makes it possible to activate the urgent or important software associated with the information.

As a seventh information processing apparatus of the present invention, there is provided an information processing apparatus comprising a display unit having a display screen on which an image is displayed, a main frame equipment having a handler for designating a position on the display screen, and a pseudo biological equipment performing a movement according to movement data, said pseudo biological equipment being connected to said main frame equipment through a cable or a radio,
wherein said main frame equipment displays symbols representative of movements of said pseudo biological equipment on the display screen of said display unit, and has a movement data producing unit responsive to an operation of an arrangement of the symbols by said handler for producing a series of movement data arranged to operate said pseudo biological equipment in accordance with an operating sequence associated with an arrangement sequence of the symbols.

According to the seventh information processing apparatus, it is possible to readily generate movement data consisting of a series of plurality of movements for the pseudo biological equipment.

As an eighth information processing apparatus of the present invention, there is provided an information processing apparatus comprising a main frame equipment having a handler for issuing events, and a pseudo biological equipment performing a movement according to movement data, said pseudo biological equipment being connected to said main frame equipment through a cable or a radio,
wherein said main frame equipment has a movement control unit for transmitting to said pseudo biological equipment movement data according to an issuing rate of the events sequentially issued from said handler.

According to the eighth information processing apparatus, for example, as a handler, there is prepared a keyboard. In such a case, the eighth information processing apparatus is encouraging for a training for an operation of the keyboard or a working over an operation of the keyboard, and thereby enhancing interests of the training and the work.

As a ninth information processing apparatus of the present invention, there is provided an information processing apparatus comprising a main frame equipment having a handler for issuing a plurality of types of events according to an operation, and a pseudo biological equipment performing a movement according to movement data, said pseudo biological equipment being connected to said main frame equipment through a cable or a radio,
wherein said main frame equipment has a movement control unit for transmitting to said pseudo biological equipment movement data according to the type of the event issued from said handler.

Also in this case, in a similar fashion to that of the eighth information processing apparatus, the ninth information processing apparatus is encouraging for a training for an operation of the keyboard or a working over an operation of the keyboard, and thereby enhancing interests of the training and the work.

As a tenth information processing apparatus of the present invention, there is provided an information processing apparatus comprising a main frame equipment adapted for executing software, and a pseudo biological equipment performing a movement according to movement data, said pseudo biological equipment being connected to said main frame equipment through a cable or a radio,
wherein said main frame equipment has a movement control unit responsive to a termination of a predetermined work by the software to be executed by said main frame equipment for transmitting the movement data to said pseudo biological equipment.

When a predetermined work is terminated, for example, when a print is terminated, or when a down load is terminated, the pseudo biological equipment is operated. Thus, it is possible to inform a user of a termination of the work.

As an eleventh information processing apparatus of the present invention, there is provided an information processing apparatus comprising a main frame equipment, and a pseudo biological equipment performing a movement according to movement data, said pseudo biological equipment being connected to said main frame equipment through a cable or a radio,
wherein said main frame equipment has a movement control unit responsive to a connection of said pseudo biological equipment to said main frame equipment for transmitting the movement data to said pseudo biological equipment.

According to the eleventh information processing apparatus of the present invention, when a pseudo biological equipment is coupled with the main frame equipment, the pseudo biological equipment is operated. Thus, it is possible for a user to recognize that the connection is surely made, and also to have such a feeling that the user gives life to the pseudo biological equipment, and thereby enhancing interest and friendship with the pseudo biological equipment.

As a twelfth information processing apparatus of the present invention, there is provided an information processing apparatus comprising a main frame equipment, and a pseudo biological equipment performing a movement according to movement data, said pseudo biological equipment being connected to said main frame equipment through a cable or a radio,
wherein said pseudo biological equipment performs a predetermined movement when disconnected from said main frame equipment.

According to the twelfth information processing apparatus of the present invention, it is possible for a user to recognize that the pseudo biological equipment is disconnected, and thereby giving a sense of security and interest to the user.

As a thirteenth information processing apparatus of the present invention, there is provided an information processing apparatus comprising a main frame equipment having a handler for designating time, and a pseudo biological equipment performing a movement according to movement data, said pseudo biological equipment being connected to said main frame equipment through a cable or a radio,
wherein said main frame equipment has a movement control unit for transmitting the movement data to said pseudo biological equipment at the time designated by said handler.

According to the thirteenth information processing apparatus, it is possible to use movements of the pseudo biological equipment as time information or an alarm. In some cases, information by sound may disturb people nearby.

On the other hand, in case of information through a display screen, an user is obliged to always look at the display screen. On the contrary, information through movements of the pseudo biological equipment makes it possible to inform time without generating sounds and even in a situation that the user may take one's eyes off the display screen.

As a fourteenth information processing apparatus of the present invention, there is provided an information processing apparatus comprising a main frame equipment having a handler for inputting schedules and designating a desired one of the inputted schedules, and a pseudo biological equipment performing a movement according to movement data, said pseudo biological equipment being connected to said main frame equipment through a cable or a radio,
wherein said main frame equipment has a movement control unit for transmitting the movement data to said pseudo biological equipment at the time associated with the designated schedule by said handler.

The fourteenth information processing apparatus of the present invention is one in which the thirteenth information processing apparatus of the present invention is expanded by the "schedule". Also in this case, it is possible to inform time without generating sounds and even in a situation that the user may take one's eyes off the display screen.

Here, the "time associated with the designated schedule" in the fourteenth information processing apparatus may be a start time of the schedule, but it is not restricted to that time. Any time is acceptable as the "time associated with the designated schedule", which is associated with the schedule, for example, 30 minutes before the starting time of the schedule.

Furthermore , the present invention provides, as first pseudo biological equipment, a pseudo biological equipment detachably coupled to a main frame equipment for performing a movement according to movement data, said pseudo biological equipment comprising:
a storage unit for storing movement data and condition data instructing condition to perform a movement based on the movement data, which data are transmitted from said main frame equipment;
a determining unit for determining based on the condition data as to whether the condition to perform a movement based on the movement data is formed; and
a driving unit for causing said pseudo biological equipment to perform a movement based on the movement data when it is decided by said determining unit that the condition to perform a movement based on the movement data is formed,
   wherein said pseudo biological equipment is activated by an electric power of an internal battery.

Accordingly, the first pseudo biological equipment is detachably coupled to the main frame equipment, and is activated by an electric power of an internal battery. Thus, in the event that the pseudo biological equipment receives once data from the main frame equipment, even if the pseudo biological equipment is detached from the main frame equipment, the pseudo biological equipment is operated when the condition is satisfied, for example, when it reaches a predetermined time, and it notifies the user that the condition is satisfied (for example, when it reaches a predetermined time).

As second pseudo biological equipment of the present invention, there is provided a pseudo biological equipment detachably coupled to a main frame equipment for performing a movement according to movement data, said pseudo biological equipment comprising:
a plurality of types of communication units one of which is selectively connected to a main frame equipment for performing communications adopting mutually different communication schemes.

According to the second pseudo biological equipment, by provision of a plurality of communication units, for example, both RS232C which is a current general interface, and USB which is becoming popular as an interface, it is possible to connect the pseudo biological equipment to an extensive range of main frame equipment.

As third pseudo biological equipment of the present invention, there is provided a pseudo biological equipment coupled to a main frame equipment for performing a movement according to movement data, said pseudo biological equipment comprising:
a driving source; and
buffer means disposed between said driving source and a portion in which change of a position or an attitude appears on an appearance.

According to the third pseudo biological equipment, the buffer means is used. This feature makes it possible to provide a pseudo biological equipment which is hard to be destroyed. Particularly, this is more effective in the event that there is provided such an arrangement that the third pseudo biological equipment is combined with the first pseudo biological equipment, and those are removed and carried.

As fourth pseudo biological equipment of the present invention, there is provided a pseudo biological equipment coupled to a main frame equipment for performing a movement according to movement data, said pseudo biological equipment comprising:
a main frame portion;
a head portion supported by said main frame portion, said head portion returning to an original position when depressed; and
a sensor for detecting that said head portion is depressed.

The head portion of the pseudo biological equipment is prominent and is a portion easy for a user to touch. The fourth pseudo biological equipment is provided with a sensor for detecting a depression of the head. According to the fourth pseudo biological equipment, it is possible to perform a natural operation.

As fifth pseudo biological equipment of the present invention, there is provided a pseudo biological equipment coupled to a main frame equipment for performing a movement according to movement data, said pseudo biological equipment comprising:
a pedestal portion having a sensor for detecting an operation.

The pedestal portion can be manufactured with toughness since it is manufactured for the purpose of fixing of the pseudo biological equipment. And the pedestal is a portion which is easy for a user to touch. According to the fifth pseudo biological equipment, the pedestal portion is provided with a sensor for detecting operation. This feature makes it possible to secure durability over a long term and provide a reliable detection.

As sixth pseudo biological equipment of the present invention, there is provided a pseudo biological equipment coupled to a main frame equipment for performing a movement according to movement data, said pseudo biological equipment comprising:
a pedestal portion incorporating therein a control unit for controlling a movement of said pseudo biological equipment through a communication with said main frame equipment; and
a main frame portion detachably mounted on said pedestal portion for performing a movement according to an instruction issued from said control unit.

According to the sixth pseudo biological equipment of the present invention, the main frame portion (body) is detachably mounted on the pedestal portion. Thus, as the main frame portion, a plurality of types of dolls or mascots, for example, a doll patterned after a figure of a person, a doll patterned after a figure of any animal, etc., are prepared and a desired one of those dolls is optionally mounted on the pedestal portion for use. In addition, according to the sixth pseudo biological equipment, the control unit is incorporated into the pedestal portion, and thus it is possible to provide an inexpensive main frame portion which is exchangeable.

As seventh pseudo biological equipment of the present invention, there is provided a pseudo biological equipment coupled to a main frame equipment for performing a movement according to movement data, said pseudo biological equipment comprising:
a driving unit for driving said pseudo biological equipment in accordance with movement data;
a battery unit for storing electric power to be supplied to said driving unit; and
a charging unit for charging said battery unit with electric power fed from said main frame equipment.

According to the seventh pseudo biological equipment, there is no need to incorporate a battery into the pseudo biological equipment, and thus it is possible to provide the pseudo biological equipment which is inexpensive in running cost. Further, according to the seventh pseudo biological equipment, even in the event that the connecting line of the main frame equipment has no ability to supply an energy for directly driving the pseudo biological equipment, it is possible to save an electric power and activate the pseudo biological equipment.

In the seventh pseudo biological equipment, it is possible for said charging unit to charge said battery unit with electric power on a communication line via which data is transmitted from said main frame equipment to said pseudo biological equipment.

Even a small power from the communication line is sufficient for the pseudo biological equipment to be activated.

In the seventh pseudo biological equipment, it is preferable that the pseudo biological equipment further comprises a boosting unit for boosting the electric power stored in said battery unit and supplying the boosted electric power to said driving unit.

Provision of the boosting unit makes it possible to activate the pseudo biological equipment, even in the event that a voltage of power supplied from the main frame equipment is low, or even in the event that the charge is not yet sufficient and the voltage is low.

Further, in the seventh pseudo biological equipment, it is preferable that the pseudo biological equipment further comprises a storage unit for storing predetermined movement data, and a disconnection detecting unit for detecting that a connection with said main frame equipment is disconnected, and transmitting the movement data stored in said storage unit to said driving unit.

This feature makes it possible to visually recognize the fact that the pseudo biological equipment is disconnected from the main frame equipment, and thereby providing a sense of security for a user. In addition, the pseudo biological equipment is operative upon disconnection from the main frame equipment. This feature makes it possible to provide a biological-like feeling for the pseudo biological equipment and also an interest. For this movement, the stored resident energy is used, and there is no need to prepare an additional power source for this movement within the pseudo biological equipment. Thus, it is possible to provide an inexpensive pseudo biological equipment.

As eighth pseudo biological equipment of the present invention, there is provided a pseudo biological equipment coupled to a main frame equipment for performing a movement according to movement data, said pseudo biological equipment comprising:
a control unit for producing a control signal to control a movement of said pseudo biological equipment through a communication with said main frame equipment, a circuit operation of said control unit being performed with electric power fed from said main frame equipment; and
a driving unit for driving said pseudo biological equipment in accordance with the control signal fed from said control unit, said driving unit being activated by electric power supplied from an internal battery.

According to the eighth pseudo biological equipment, since the control unit is driven with an electric power supplied from the main frame equipment, the control unit is not activated when the pseudo biological equipment is not coupled to the main frame equipment. Consequently, electric power is not consumed also in the driving unit. This feature makes it possible to prevent a battery from being subjected to a power dissipation even if the pseudo biological equipment is sold while incorporating the battery therein. In addition, in the event that the pseudo biological equipment is transferred to a user while incorporating thereinto the battery, this may simplify an initial setting of the pseudo biological equipment. Further, according to the eighth pseudo biological equipment, connection and disconnection with and from the main frame equipment serve as a main switch, and thus it is possible to avoid a necessity for an additional main switch. This feature makes it possible to reduce the manufacturing cost for the pseudo biological equipment.

As ninth pseudo biological equipment of the present invention, there is provided a pseudo biological equipment coupled to a main frame equipment for performing a movement according to movement data, said pseudo biological equipment comprising:
a main frame portion;
a rocking shaft supported on said main frame portion horizontally;
a head portion supported on said rocking shaft, said head portion returning to an original position when depressed; and
a sensor having a push button depressed in accordance with a depression of said head portion, said push button returning to an original position when depressed, said sensor detecting that said push button is depressed,
   wherein said rocking shaft is disposed right above said push button, and said push button is depressed by said rocking shaft when said head portion is depressed.

As tenth pseudo biological equipment of the present invention, there is provided a pseudo biological equipment coupled to a main frame equipment for performing a movement according to movement data, said pseudo biological equipment comprising:
a main frame portion;
a rocking shaft supported on said main frame portion horizontally;
a head portion supported via a spring on said rocking shaft, said head portion returning to an original position when depressed; and
a sensor having a push button depressed in accordance with a depression of said head portion, said push button returning to an original position when depressed, said sensor detecting that said push button is depressed.

As eleventh pseudo biological equipment of the present invention, there is provided a pseudo biological equipment coupled to a main frame equipment for performing a movement according to movement data, said pseudo biological equipment comprising:
a main frame portion;
a rocking shaft having spring properties supported on said main frame portion horizontally;
a head portion fixed on said rocking shaft, said head portion returning to an original position when depressed; and
a sensor having a push button depressed in accordance with a depression of said head portion, said push button returning to an original position when depressed, said sensor detecting that said push button is depressed.

According to the ninth to eleventh pseudo biological equipment, it is possible to reliably detect a depression of the head having a mechanism capable of rocking (wobbling) notion on a rocking shaft with a simple structure.

As twelfth pseudo biological equipment of the present invention, there is provided a pseudo biological equipment coupled to a main frame equipment for performing a movement according to movement data, said pseudo biological equipment comprising:
a main frame portion;
a head portion supported via a spring on said main frame portion; and
a pair of head driving mechanisms each having a lever supported on said main frame portion and extending vertically and a driving unit for rotatively moving said lever, said pair of head driving mechanisms being engaged with said head portion at upper portions of the levers to move the head portion,
   wherein the head portion is inclined or is turned sideways according as both of said pair of head driving mechanisms are simultaneously activated or one of said pair of head driving mechanisms is activated.

According to the twelfth pseudo biological equipment of the present invention, it is possible to move the head of the pseudo biological equipment even if the pseudo biological equipment is small in size. Further, according to the twelfth pseudo biological equipment, it is possible to move horizontally and vertically the head with a simple structure, and thereby providing for a user a plentiful expression at low cost.

As thirteenth pseudo biological equipment of the present invention, there is provided a pseudo biological equipment coupled to a main frame equipment for performing a movement according to movement data, said pseudo biological equipment being operative on a digital basis such that the movement data represented by binary values according to pulse width is transmitted from said main frame equipment, said pseudo biological equipment comprising:
a flip-flop for storing the movement data; and
a decode circuit for supplying the movement data transmitted from said main frame equipment to said flip-flop, regardless of the pulse width, in form of a clock instructing a timing to receive data into said flip-flop, and for processing the movement data transmitted from said main frame equipment so as to be received into said flip-flop in the form of a logic signal of logic level dependent on the pulse width and supplying the movement data thus processed to said flip-flop in the form of data.

According to the thirteenth pseudo biological equipment of the present invention, data transmitted from the main frame equipment is used for both the data itself and the clock. This feature avoids the necessity of a large scale clock generating circuit which will be needed usually. Thus, it is possible to provide an inexpensive pseudo biological equipment.

As fourteenth pseudo biological equipment of the present invention, there is provided a pseudo biological equipment coupled to a main frame equipment for performing a movement according to movement data, said pseudo biological equipment comprising:
a sensor for detecting an operation of said pseudo biological equipment,
   wherein said sensor comprises a switch disposed in series with a resistance between two status output lines for transmitting mutually different voltages outputted from said main frame equipment, wherein a status input line for transmitting a voltage signal to said main frame equipment is connected to a connection point with the resistance.

According to the fourteenth pseudo biological equipment of the present invention, when a sensor for detecting an operation of the pseudo biological equipment is provided on the pseudo biological equipment, it is sufficient for the pseudo biological equipment to simply include only one resistance and one switch. This contributes to implementing the pseudo biological equipment at low cost. Further, according to the fourteenth pseudo biological equipment, as will be described later, it is possible at the main frame equipment end to readily detect as to whether the pseudo biological equipment is connected to the main frame equipment.

As fifteenth pseudo biological equipment of the present invention, there is provided a pseudo biological equipment coupled to a main frame equipment for performing a movement according to movement data, said pseudo biological equipment comprising:
a main frame portion;
a head portion supported on said main frame portion having a gap between said head portion and said main frame portion, said head portion being movable with respect to said main frame portion and changing a color of its surface by color light emitted inside said head portion;
an emitter for irradiating a front of said head portion with color light inside said head portion; and
a shading member for preventing an irradiation of color light emitted from said emitter through the gap onto a surface of said main frame portion.

According to the fifteenth pseudo biological equipment of the present invention, color light emitted from the emitter is irradiated onto only the front of the head of interest, but not onto the main frame portion. Thus, a color sharply changes between the front of the head and the main frame portion, and it is possible to enhance the change of the complexion of the head and indicate the same to a user.

As sixteenth pseudo biological equipment of the present invention, there is provided a pseudo biological equipment coupled to a main frame equipment for performing a movement according to movement data, said pseudo biological equipment comprising:
a main frame portion;
a head portion supported on said main frame portion having a gap between said head portion and said main frame portion, said head portion being movable with respect to said main frame portion and changing a color of its surface by color light emitted inside said head portion;
an emitter for irradiating a front of said head portion with color light inside said head portion; and
an emitter driving unit for supplying to said emitter an electric power pulse train of a duty ratio selected from a plurality of duty ratios.

In this way, it is possible to change the complexion (appearance of the doll or toy) simply and plentifully in expression.

Reference will now be made, by way of example only, to the accompanying drawings in which:-
Fig. 1 is a schematic construction view of an information processing apparatus according to an embodiment of the present invention.
Fig. 2 is a flowchart useful for understanding a processing related to a message preparation.
Fig. 3 is a flowchart useful for understanding a processing related to a message reception.
Fig. 4 is an illustration showing a first processing example according to the flowcharts shown in Figs. 2 and 3.
Fig. 5 is an illustration showing a second processing example according to the flowcharts shown in Figs. 2 and 3.
Fig. 6 is an illustration showing a third processing example according to the flowcharts shown in Figs. 2 and 3.
Fig. 7 is an illustration showing a processing example after reception of a message.
Fig. 8 is an explanatory view useful for understanding a processing in the event that the present invention is applied to an online communication system (chat system).
Fig. 9 is an explanatory view useful for understanding a processing in case of a reply of a response message in a chat system.
Fig. 10 is an explanatory view useful for understanding an alternative processing example in the event that the present invention is applied to a chat system.
Fig. 11 is an explanatory view useful for understanding a processing in the event that the present invention is applied to an access to a home page of an internet.
Fig. 12 is an illustration showing a processing in the event that the present invention is applied to an access to a home page of an internet.
Fig. 13 is a flowchart useful for understanding a processing related to a message reception.
Fig. 14 is a flowchart useful for understanding an alternative processing example related to a message reception.
Fig. 15 is a flowchart useful for understanding a still alternative processing example related to a message reception.
Fig. 16 is a flowchart useful for understanding a processing in the event that a doll is provided with a sensor for detecting an existence of a person before the doll.
Fig. 17 is an explanatory view useful for understanding coordinated movements of a multimedia software and a doll.
Fig. 18 is a perspective illustration showing a doll and an information processing equipment to which the doll is connected.
Fig. 19 is a flowchart useful for understanding an example of coordinated movements of a doll's movement and an operation for the doll when a game program is run on an information processing equipment.
Fig. 20 is an explanatory view useful for understanding a processing for coordinated movements of a screen saver program and a doll's movement.
Fig. 21 is a perspective view of an image processing equipment and a doll.
Fig. 22 is a flowchart useful for understanding an example of a way of terminating the screen saver program shown in Fig. 20.
Fig. 23 is a flowchart useful for understanding an example of a way of inputting a password.
Fig. 24 is a flowchart useful for understanding an alternative embodiment of the present invention.
Fig. 25 is an explanatory view useful for understanding an operation in the event that there are a plurality of programs for operating a doll and a priority is applied to the programs.
Fig. 26 is an explanatory view useful for understanding a technique of preparing an operating program for a doll, which consists of a series of operating program.
Fig. 27 is an explanatory view useful for understanding an example of a processing in which a doll is operated in accordance with an event such as a keyboard and a mouse.
Fig. 28 is an explanatory view useful for understanding an alternative example of a processing in which a doll is operated in accordance with an event such as a keyboard and a mouse.
Fig. 29 is an explanatory view useful for understanding a processing in which a termination of a specific process according to a program is informed by movements of a doll.
Fig. 30 is a flowchart useful for understanding a processing in which a termination of a specific process according to a program is informed by movements of a doll.
Fig. 31 is an explanatory view useful for understanding a processing in which a doll is connected to an information processing equipment.
Fig. 32 is an explanatory view useful for understanding a processing in which a doll is removed from an information processing equipment.
Fig. 33 is an explanatory view useful for understanding a time designation screen.
Fig. 34 is a flowchart useful for understanding a processing in which a doll is operated at the designated time.
Fig. 35 is an explanatory view useful for understanding a schedule preparation screen.
Fig. 36 is a flowchart useful for understanding a processing in which a doll is operated at the time associated with the designated schedule.
Fig. 37 is a construction view of a doll which is an example of a pseudo biological equipment according to the present invention.
Fig. 38 is a perspective view of a doll connected to a personal computer.
Fig. 39 is a circuit diagram of a doll.
Fig. 40 is a block diagram of an example of an internal constitution of a doll.
Fig. 41 is a block diagram of an alternative example of an internal constitution of a doll.
Fig. 42 is an illustration of an example of a driving mechanism of a doll.
Fig. 43 is an illustration of an alternative example of a driving mechanism of a doll.
Fig. 44 is an illustration of an example of a structure of a doll.
Fig. 45 is an illustration of an alternative example of a structure of a doll.
Fig. 46 is an explanatory view useful for understanding coordinated movements between a personal computer and a doll.
Fig. 47 is an illustration of a further alternative example of a structure of a doll.
Fig. 48 is a block diagram of a further alternative example of an internal constitution of a doll.
Fig. 49 is a block diagram of a furthermore alternative example of an internal constitution of a doll.
Fig. 50 is a block diagram of a still further alternative example of an internal constitution of a doll.
Fig. 51 is a block diagram of a still furthermore alternative example of an internal constitution of a doll.
Fig. 52 is an illustration of a further alternative example of a structure of a doll.
Fig. 53 is an illustration of a furthermore alternative example of a structure of a doll.
Fig. 54 is an illustration of a still further alternative example of a structure of a doll.
Figs. 55 (A), (B) and (C) show illustrations of a still furthermore alternative example of a structure of a doll.
Fig. 56 is a circuit diagram of a data receiving circuit for receiving data from an equipment, such as a personal computer, which is connected to a doll, of the inside of the doll.
Fig. 57 is a wave form chart of signal waves of the circuit shown in Fig. 56.
Fig. 58 is a view showing an example of a serial data receiver according to the earlier technology.
Fig. 59 is a circuit diagram of a modification of the circuit shown in Fig. 56.
Figs. 60(A)-60(E) show examples of various types of circuits which adopt basic ideas explained referring to Figs. 58 and 59.
Fig. 61 is a construction view of a sensor (switch) incorporated into a doll.
Fig. 62 is an illustration of an example of a construction of a head of a doll.
Fig. 63 is an extended view of part of the head of the doll shown in Fig. 62.
Fig. 64 is an illustration of a comparative example of a construction of a head of a doll.
Fig. 65 is a wave form chart of luminescence wave forms of LED's for controlling a degree of variations of color of a face of a doll.

Embodiments of the present invention will be described with reference to the accompanying drawings.

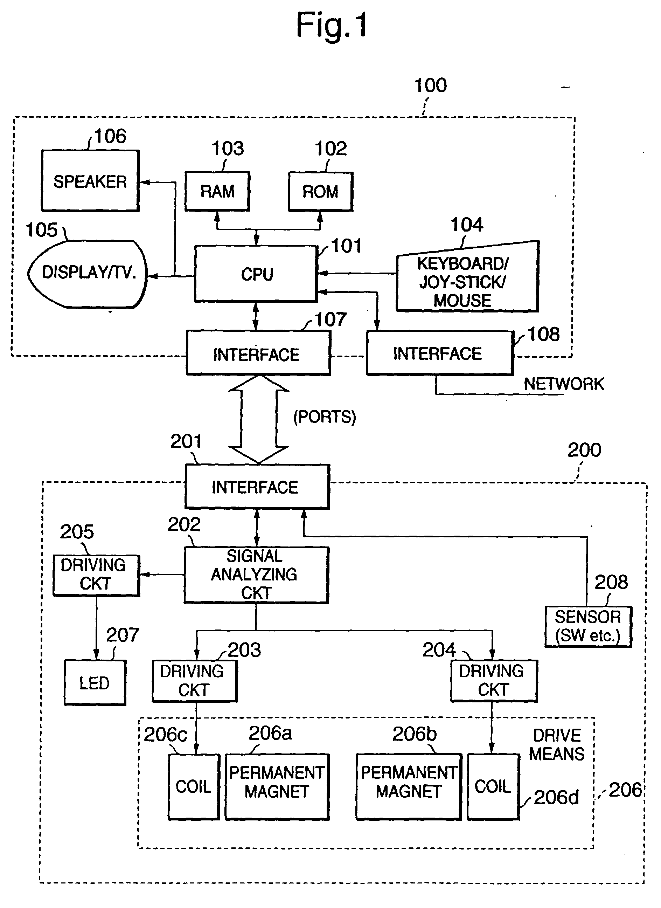

Fig. 1 is a schematic construction view of an information processing apparatus according to an embodiment of the present invention.

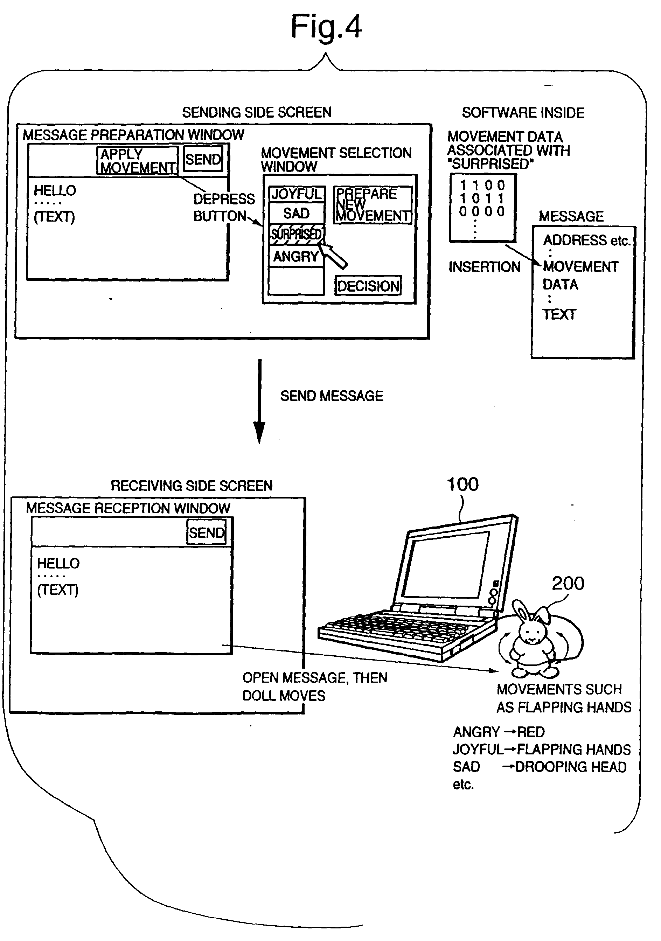

The information processing apparatus shown in Fig.1 comprises an information processing equipment 100 and a doll 200. An appearance of the information processing apparatus is shown, for example, in Figs. 4, 5, 6 and a plurality of figures following those figures.

The information processing equipment 100 comprises a central processing unit (CPU) 101 in which various types of software are executed, a ROM 102 for storing various types of software, a RAM 103 which is used as a working area when various types of software are executed in the CPU 101, a handler 104, such as a keyboard, a joy-stick and a mouse, which issues various types of user events to the CPU 101, a display unit 105, such as a display and a television, which displays various types of screen associated with a software executed in the CPU 101, a speaker 106 for outputting a voice associated with a software executed in the CPU 101, an interface 107 for performing a communication with the doll 200, and an interface 108 for performing a communication with an external equipment via a network.

On the other hand, the doll 200 comprises an interface 201 for performing a communication with the information processing equipment 100; a signal analyzing circuit 202 for analyzing a signal received by the interface 201; driving circuits 203 and 204 for driving drive means 206 in accordance with a signal analyzing result by the signal analyzing circuit 202; a driving circuit 205 for driving an LED 207 in accordance with a signal analyzing result by the signal analyzing circuit 202; drive means 206 driven by the driving circuits 203 and 204, the drive means 206 comprising, for example, permanent magnets 206a, 206b and coils 206c, 206d; the LED 207 driven by the drive means 206; and a sensor 208 such as a switch.

While Fig. 1 shows single drive means 206, according to the present embodiment, there are provided two systems of drive means for moving a head and drive means for moving arms.

The LED 207 comprises two LED's one of which emits light of color of red and another light of color of blue.

As the sensor 208, in accordance with an embodiment of the present invention which will be described later, there is provided a sensor for detecting a fact that a user depresses a head of the doll 200, or a sensor for detecting as to whether a person is before the doll 200. Hereinafter, unless a type of the sensor 208 is particularly noted, the sensor 208 is a type of the sensor for detecting a fact that a user depresses a head of the doll 200.

Further, with respect to the interfaces 107 and 201, in the following explanation of the present invention, it is assumed that these interfaces are of a type of RS232C interface cable. However, the interfaces 107 and 201 are not restricted to a type of RS232C interface and a type of interface for cable communications, and it is acceptable that the interfaces 107 and 201 is a type of interface for USB and the like, a type of interface for a parallel communication system, or a type of interface for a communication system in which a communication is performed through infrared or radio.

The interfaces 108 is used to transmit and receive an electronic mail via a network such as a telephone line network between the information processing equipment 100 and an external equipment, and also to access a home page of an internet. Here, it is assumed that as the external equipment an information processing apparatus, which is the same as the information processing apparatus shown in Fig. 1 in the structure, is connected via the network to the information processing apparatus shown in Fig. 1. Unless it is particularly noted, when it is simply referred to as the "external equipment", the "external equipment" is an information processing apparatus having the same structure as the information processing apparatus shown in Fig. 1, which is connected via the network.

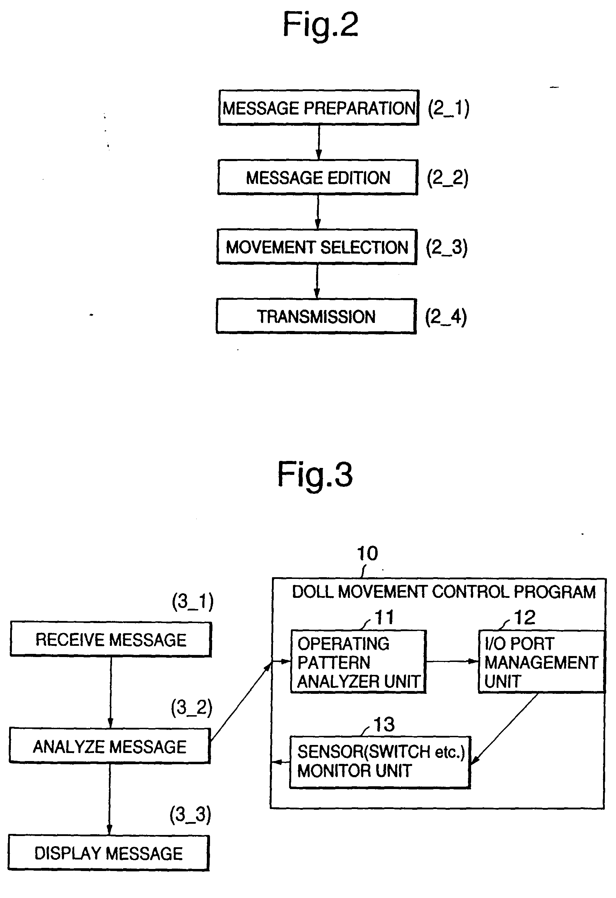

Fig. 2 is a flowchart useful for understanding a processing related to a message preparation in the external equipment. Fig. 3 is a flowchart useful for understanding a processing related to a message reception in the information processing apparatus shown in Fig. 1. Here, it is assumed that the external equipment prepares and transmits a message, and the information processing apparatus shown in Fig. 1 receives the message transmitted from the external equipment. However, it is acceptable that the information processing apparatus shown in Fig. 1 prepares and transmits a message, and the external equipment receives the message transmitted from the information processing apparatus shown in Fig. 1. It is noted that the "message", which will appear in the following embodiments, is not always to be talked via a network, and includes also a message which is prepared in the information processing apparatus shown in Fig. 1, regardless of a matter as to whether a message is to be transmitted to the external equipment, unless the embodiment is concerned with an embodiment in which a communication involving the network is an indispensable matter.

Here the message may include operating data for operating the doll 200.

In the external equipment, as shown in Fig. 2, a message (text) is newly prepared (step 2_1), an edition of the prepared message is performed (step 2_2), a sort of movement of the doll 200 is selected c, and a message including operating data for movement of the doll 200 is transmitted (step 2_4).

In the information processing apparatus shown in Fig. 1, the interface 108 receives a message transmitted via the network (step 3_1), and the CPU 101 analyzes the message in accordance with a message analyzing program to extract operating data from the message (step 3_2). The extracted operating data is transferred to a doll movement control program 10 for controlling a movement of a doll, and display data excepting the operating data from the received data is transmitted to the display unit 105 so that a message is displayed on a display screen (step 3_3).

The doll movement control program 10 comprises an operation pattern analyzer unit 11, an input/output port management unit 12 and a sensor monitor unit 13. When the doll movement control program 10 receives operating data, the operating data is analyzed by the operation pattern analyzer unit 11 and converted into a data format suitable for a transmission to the doll 200. The operating data after a data format conversion is transmitted from the interface 107 (cf. Fig. 1) which is controlled by the input/output port management unit 12. At the doll 200 side which receives the operating data, the interface 201 shown in Fig. 1 receives the operating data, the signal analyzing circuit 202 analyzes the operating data, and the driving circuits 203, 204 and 205 drive the drive means 206 to move the neck and the arms of the doll 200, and drive the LED 207 to change a face of the doll 200 to a reddish complexion or a pale complexion. When the head of the doll 200 is depressed, it is detected by the sensor 208 shown in Fig. 1 that the head of the doll 200 is depressed. This information is transferred from the interface 201 of the doll side to the interface 107 of the information processing equipment side, and is transmitted via the input/output port management unit 12 of the doll movement control program 10 to the sensor monitor unit 13 so that it is recognized that the head of the doll 200 is depressed. However, according to the present embodiment shown in Fig. 3, there is shown no action of the information processing equipment side to the fact that the head of the doll 200 is depressed. Incidentally, also in the event that the doll 200 is provided with a sensor for detecting a matter as to whether a person is before the doll 200, a detection result is recognized by the sensor monitor unit 13 in a similar fashion to that of the above.

Fig. 4 is an illustration showing a first processing example according to the flowcharts shown in Figs. 2 and 3.

In the external equipment(sending side), a message preparation window is opened on a sending side screen, and a message (text) is prepared. When an icon of "apply movement" in the message preparation window is clicked, a movement selection window is opened. Then, a mode of movements of a doll at the receiving side is selected through the movement selection window. According to the present example, as a mode of movements of a doll, "surprised" is selected. When this mode is selected and a "decision" of icon is clicked, movement data associated with "surprised" is prepared inside the software now on running at the sending side, and is inserted into the message. And thereafter, when a "send" button in the message preparation window is clicked, a message including the movement data is transmitted to the destination which is designated beforehand.

In the receiving side (the information processing equipment 100), upon receipt of the message, a message reception window is opened to display thereon a message text, and the doll 200 performs a movement associated with the "surprised" which was inserted into the message at the sending side. As mentioned above, here, the doll 200 performs four basic movements such as moving the head (the neck), moving the arms (the hands), offering a pale complexion, and offering a reddish complexion (here, change of complexion is included in "movement"), and their combination as well.

Here, a word in the movement selection window at the sending side, for example, "surprised", is used for indicating the movement data. Such a movement data is inserted into a document message prepared on the message preparation window and then transmitted. At the receiving side, the movement data is extracted from the received message, and the movement data thus extracted is used for a movement of the doll 200. The movement data is not reflected on the message reception window, but only the message prepared on the message preparation window at the sending side is displayed on the message reception window. That is, here, a control statement, which is distinguished from display data, is used for the movement data.

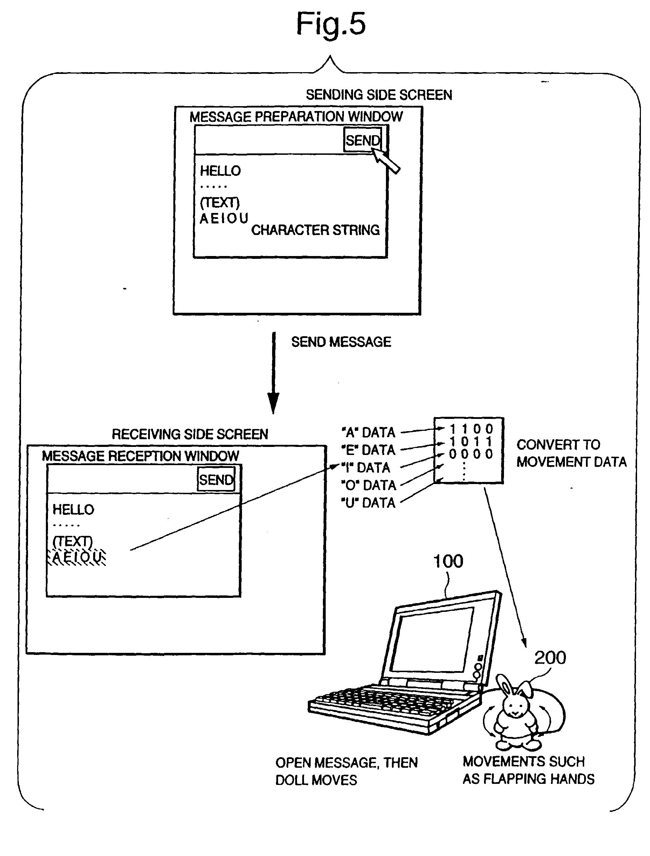

Fig. 5 is an illustration showing a second processing example according to the flowcharts shown in Figs. 2 and 3.

In case of the first processing example shown in Fig. 4, in the sending side there are prepared the message preparation window and the movement selection window as well, so that a message including movement data, which is not reflected on a display at the receiving side, is prepared. On the other hand, according to the example shown in Fig. 5, a specific character string, for example, "A E I O U", is inserted into the message preparation window and is transmitted. This "A E I O U" is part of text data, and a control statement as the text data is used as it is.

At the receiving side, the specific character string "A E I O U" is extracted from the received message, and "A", "E", "I", "O" and "U" are individually converted into the associated movement data, respectively, and then transmitted to the doll 200, so that the doll 200 moves in accordance with the movement data.

Thus, when there is provided an arrangement in such a manner that a movement pattern is associated with a word or a character, and a series of movements is formed with a character string or a word string, it is possible to insert movement data into a message, without opening the additional window (the movement selection window) as shown in Fig. 4, whereby it is easy for a user to understand and also making it easy to prepare movements.

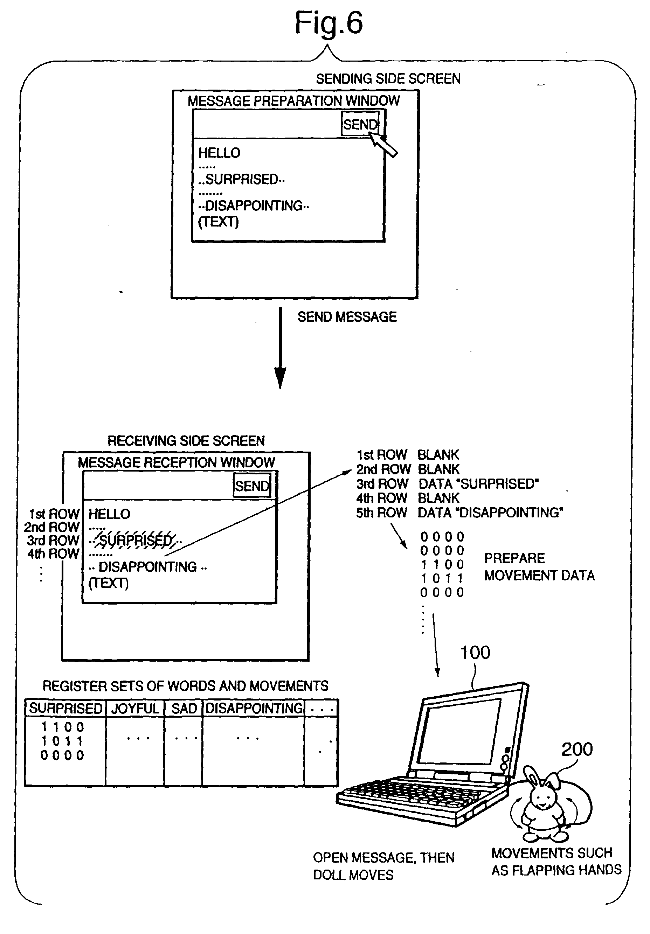

Fig. 6 is an illustration showing a third processing example according to the flowcharts shown in Figs. 2 and 3.

In case of the processing example shown in Fig. 6, in a similar fashion to that of the processing example shown in Fig. 5, part of the text inputted to the message preparation window serves as the movement data as it is at the sending side. In the information processing equipment 100, there is prepared an association table between the specific words and the movement data. Upon receipt of a message, the specific words (here, "surprised" and "disappointed"), which are registered beforehand, are extracted from the received message, and the extracted words are converted into movement data. The doll 200 moves in accordance with the movement data obtained through the conversion. This feature makes it possible for a message preparation side to prepare a message without being conscious of movements of a doll. This is not restricted to communications of messages, and is applicable, for example, to an access of a home page of an internet. That is, a text on the network is down loaded to extract a specific word, and the extracted word is replaced by movement data so that the doll 200 can move.

The examples shown in Figs. 4, 5 and 6 are also applicable to a case where the information processing equipment 100 shown in Fig. 1 takes a part of a message preparation side. In case of the example shown in Fig. 4, an arrangement that the movement selection window is opened to select a movement and the associated doll moves makes it possible to confirm its movement prior to a transmission of the message. This is the similar to the matter of the example shown in Fig. 5. It is acceptable to provide such an arrangement that when a specific character string is inputted to a text, one's own doll makes a performance in accordance with the specific character string. In the example shown in Fig. 6, in the event that there is provided such an arrangement that a doll moves in accordance with an input of a specific word, for example, while a text of a word processor is inputted, then a sense of play is added to an input work for a word processor, and thus it will be encouraging to the input work for the word processor.

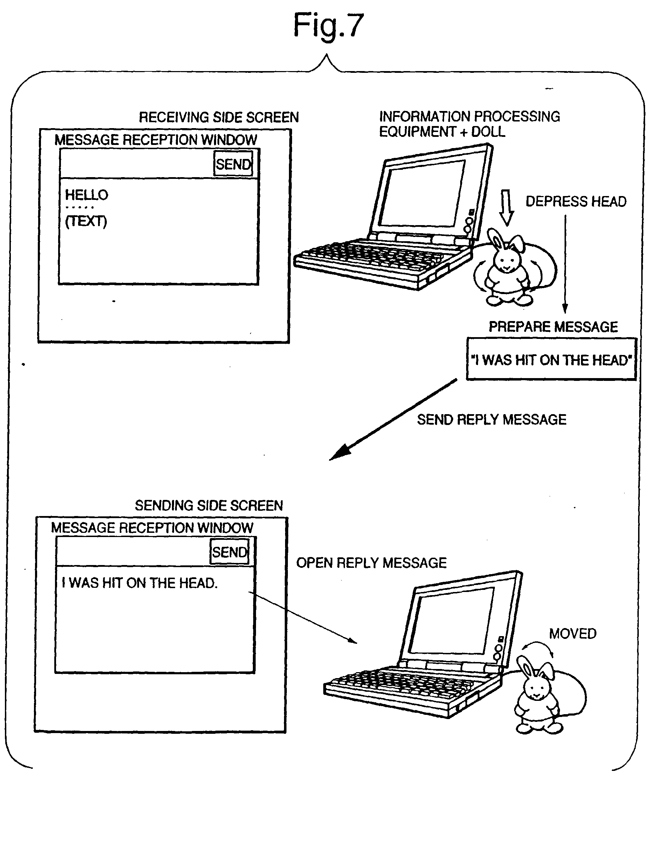

Fig. 7 is an illustration showing a processing example after reception of a message.

When a message reception window is opened at the message receiving side, a message text is displayed and a doll moves. When the doll is hit on the head, a response message "hit on the head" is prepared and is automatically returned to the sender who sent the message.

In the sender who received the response message, the response message is displayed on the message reception window. Thus, it is possible to know the fact that the party confirmed the message which one's own sent.

Here, in the above description, it is explained that the response message is displayed on the message reception window. However, it is acceptable that as the response message movement data for a doll is transferred, and the doll of the sender, who sent the message, is moved in accordance with the movement data, or alternatively it is also acceptable that the response message is displayed on the message reception window, and in addition the doll is moved in accordance with the movement data.

In the above description, it is explained that a doll is hit on the head in the message receiving side. However, it is acceptable that for example, two sensors are disposed at the head and the breast of a doll, respectively, and different response messages are prepared according as the doll is hit on the head or the breast, or alternatively according as the doll is hit first the head and then breast or first the breast and then the head, and are transmitted to the sender. Further, it is acceptable that a single sensor is provided for the head, and different response messages are prepared according as a doll is hit on the head once or twice, or in specific rhythm. Furthermore, it is also acceptable that there is provided a sensor for detecting as to whether a person is before the doll, and in the message receiving side different messages are prepared according as a person is before the doll or not, and are transmitted to the sender. In this case, it is possible for the sender to know, for example, that the receiver side is away right now and thus the party cannot confirm the transmitted message immediately.

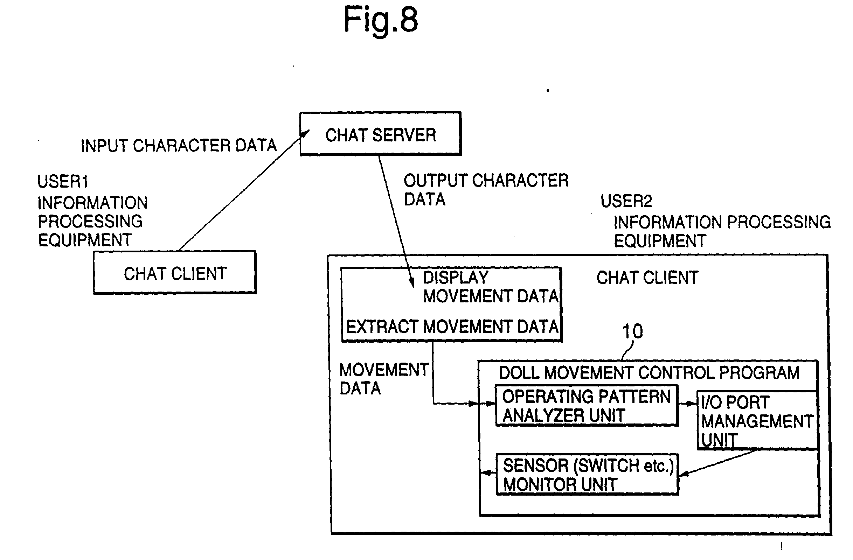

Fig. 8 is an explanatory view useful for understanding a processing in the event that the present invention is applied to an online communication system (chat system). The chat system is a system in which a plurality of chat clients mutually transmit and receive messages therebetween through a chat server so that a "chat" is performed. Here, it is assumed that each of the plurality of chat clients is provided with the information processing equipment 100 and the doll 200. Also in this system, it is assumed that the message includes movement data according to any mode as mentioned above.

When a certain chat client transmits a message, the message is received via the chat server by another chat client (or a plurality of chat clients) who joins the chat. The chat client, who received the message, extracts from the received message movement data for moving the doll and transmits the extracted movement data to the doll movement control program 10. Thus, the doll moves in accordance with the movement data.

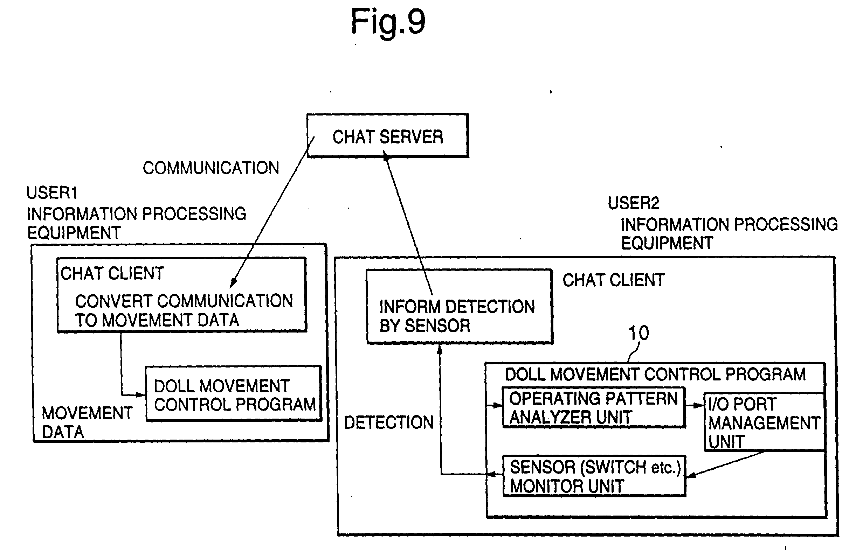

Fig. 9 is an explanatory view useful for understanding a processing in case of a reply of a response message in a chat system.

When the doll is operated at the message receiving side (for example, hitting the doll on the head), the operation (for example, hitting the doll on the head) is detected by the sensor monitor unit 13 of the doll movement control program 10, and a response message is automatically prepared. The response message is transmitted via the chat server to a chat client as the sender. The chat client converts the response message into movement data, and it is informed the user of the chat client through movements of the doll that a sending message is received. Alternatively, it is acceptable that the response message is displayed and informed with a text. In case of the chat system, it happens that a plurality of receiving ends exist, and it is not restricted to only one receiving end. Thus, particularly in case of the chat system, it is preferable to return the response message capable of identifying the sender for the response message (or the destination of the original message). In this case, at the receiving side of the response message, a doll performs different movements in accordance with a sender of the response message, or alternatively there is provided such a display that a sender of the response message can be identified on the display screen.

Further, in a similar fashion to that of the above, it is acceptable that there is provided a sensor for detecting as to whether a person is before the doll 200 and it is informed another chat participant through a movement of a doll of the participant or a display that a user is before a chat client.

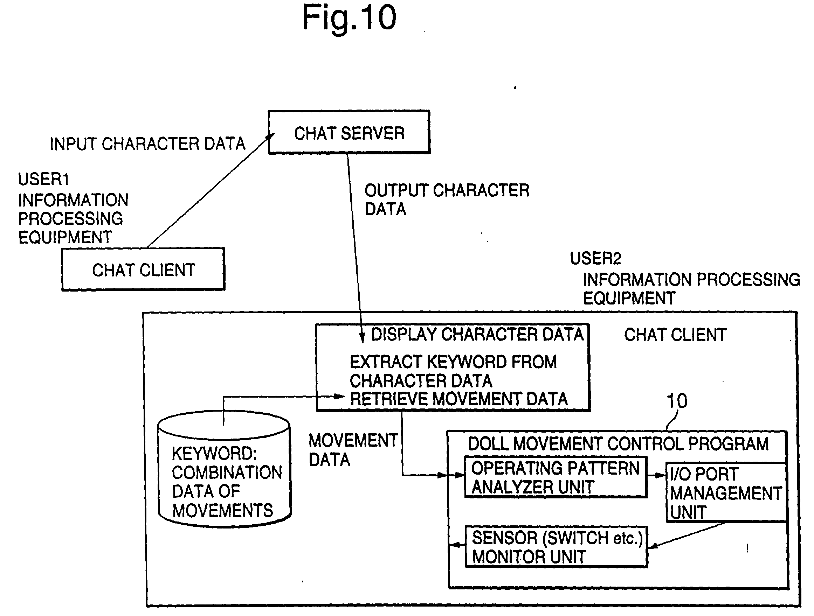

Fig. 10 is an explanatory view useful for understanding an alternative processing example in the event that the present invention is applied to a chat system.

Here, one's own name or nickname appears, or a keyword showing a topic in which oneself is interested is registered.

When one's own name or nickname appears, or when a keyword, which is registered beforehand, appears in a conversation in which oneself is interested, one's own doll moves. Thus, it is possible to know that even if an user does not see the display screen, a conversation in which oneself is to be joined starts.

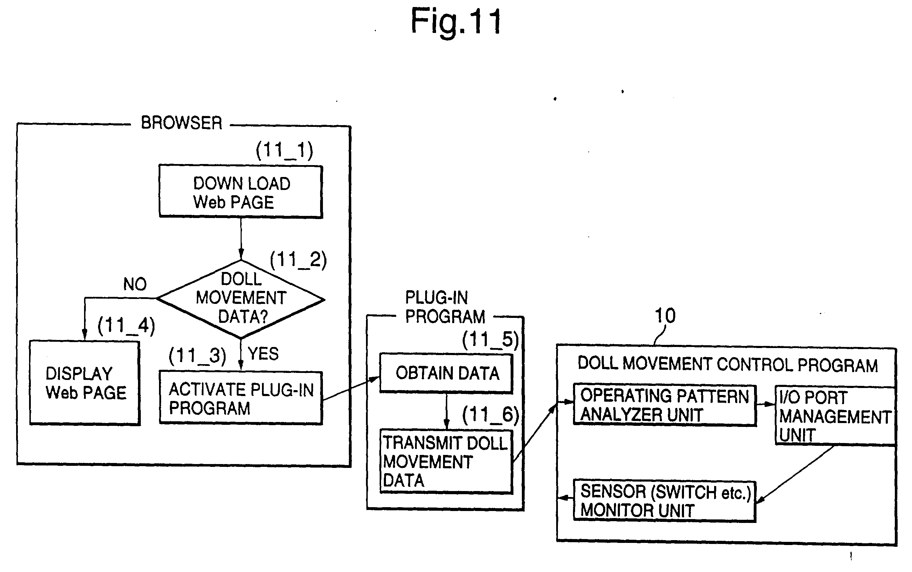

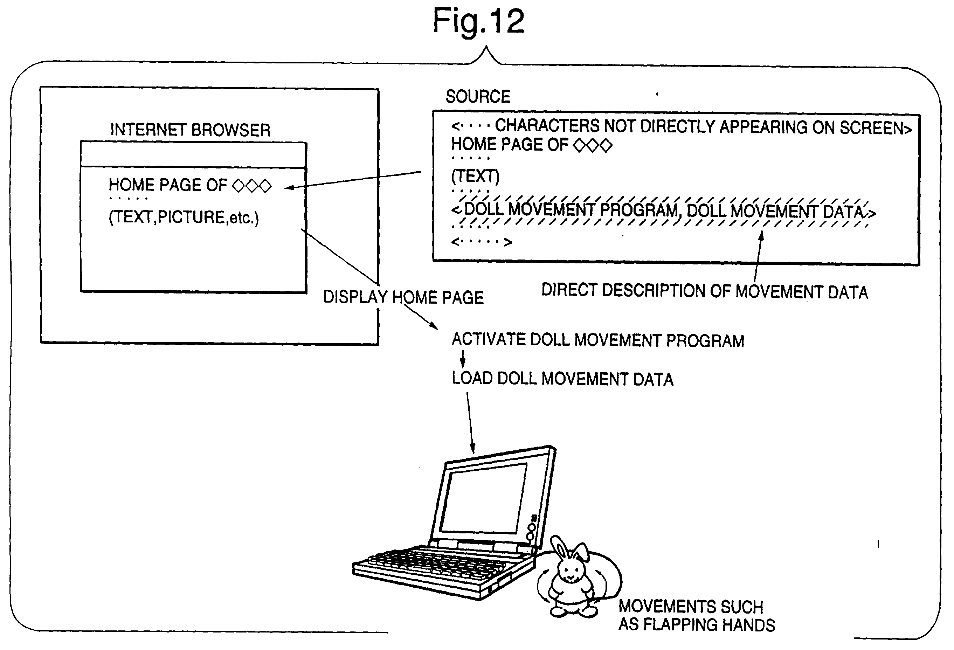

Fig. 11 is an explanatory view useful for understanding a processing in the event that the present invention is applied to an access to a home page of an internet. Fig. 12 is an illustration showing a processing in the event that the present invention is applied to an access to a home page of an internet.

Here, it is assumed that as shown in Fig. 12 a doll movements program consisting of a series of movement data is prepared together with a text in a source of the home page.

When a home page is down loaded by a browser shown in Fig. 11 (step 11_1), it is determined as to whether down loaded data is doll movement data (step 11_2). When it is decided that the loaded data is doll movement data, a plug-in program is activated (step 11_3). When it is decided that the loaded data is not doll movement data, the home page is displayed on a screen in accordance with another usual processing (step 11_4).

In the plug-in program, upon receipt of the doll movement data (step 11_5), the doll movement data is transmitted to the doll movement control program 10 (step 11_6). The doll movement control program 10 transmits the movement data to the doll in accordance with the processing as mentioned above so that the doll moves.

In this manner, the information processing apparatus according to the present invention is applicable also to the access of a home page of an internet.

The above-mentioned processes are a processing related to a case where doll movement data is included in a message. On the other hand, the processes, which will be described hereinafter, also include a processing related to a case where there is no need to include doll movement data in a message.

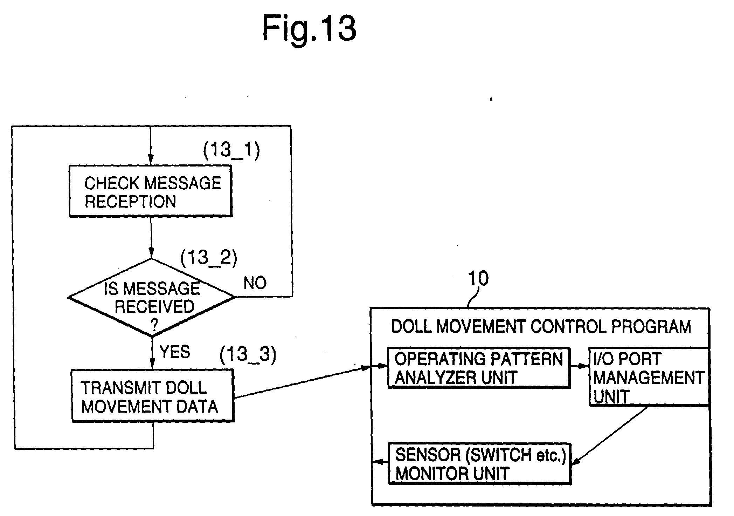

Fig. 13 is a flowchart useful for understanding a processing related to a message reception.

In the information processing equipment 100 shown in Fig. 1, there is performed a message reception check as to whether a message arrives at regular intervals (for example, every 10 minutes) (step 13_1). With respect to this message, there in no need to include doll movement data in the message. When it is decided that the message is received (step 13_2), the doll movement data is transmitted to the doll movement control program 10 (step 13_3), so that a doll moves in accordance with the doll movement data. Thus, even if a user does not see a display screen, it is informed the user that the message has been arrived.

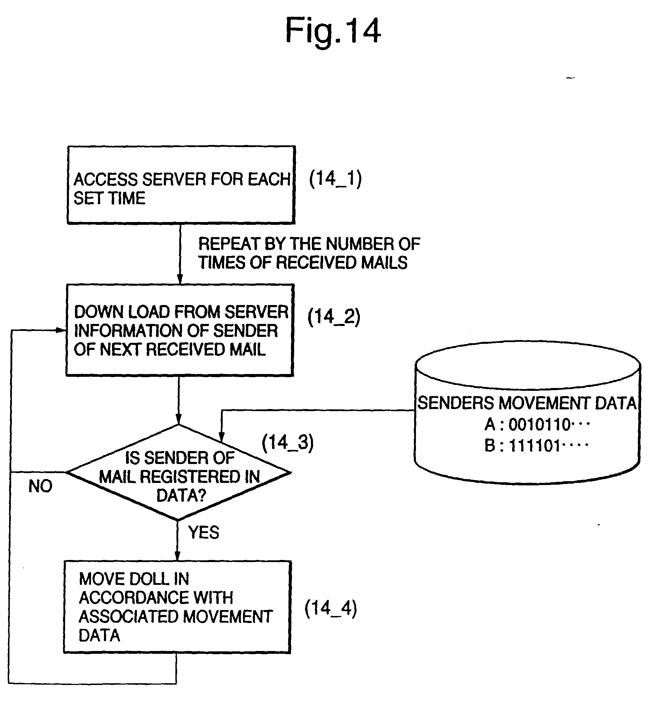

Fig. 14 is a flowchart useful for understanding an alternative processing example related to a message reception.

Here, there is prepared beforehand an association table between a destination of a message (mail) and doll movement data. Further, according to the present embodiment, the message (mail) is received by a server, and is transmitted to an information processing equipment of the destination in accordance with a request of transmission from the information processing equipment of the destination.

Here, it is accessed for each set time, for example, for each 10 minutes, as to whether a mail arrives a server (step 14_1). When a received mail arrives, information of the sender of the received mail is down loaded from the server (step 14_2). It is determined in accordance with the down loaded information of the sender as to whether the sender is registered in the association table between the sender and the doll movement data (step 14_3). When it is decided that the sender of the mail is registered in the association table, movement data associated with the sender is transmitted to the doll movement control program 10 (cf. Fig. 13), so that the doll moves in accordance with the movement data (step 14_4). In the event that a plurality of mails arrive, this processing is repeated by a number of the received mails.

Thus, the user of the mail receiving side can identify, prior to reading a message, a sender of the message.

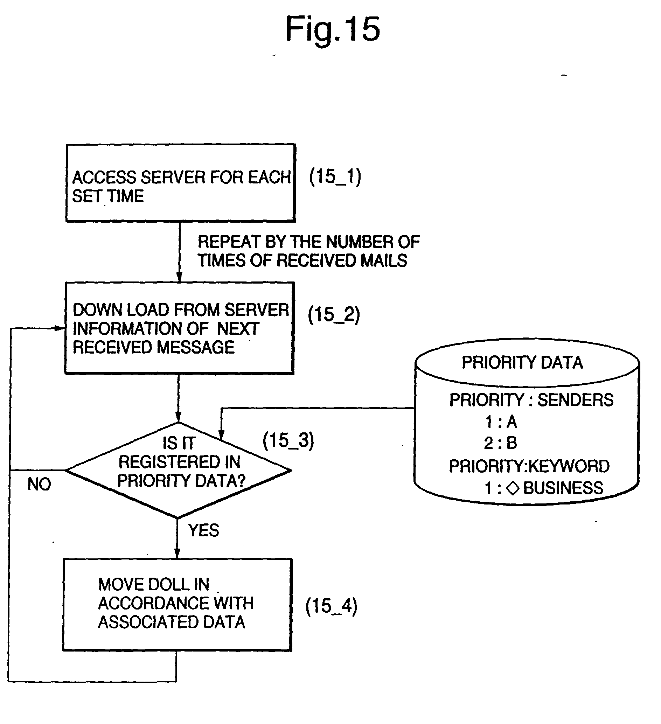

Fig. 15 is a flowchart useful for understanding a still alternative processing example related to a message reception.

Here, senders of messages (mails) and specific key words in the messages are registered beforehand with applying priority. The processing example shown in Fig. 15 is also, in a similar fashion to that of the example shown in Fig. 14, an example that a message is received once at the server, and is transmitted to an information processing apparatus of a destination when required.

Here, in a similar fashion to that of Fig. 14, it is accessed for each set time, for example, for each 10 minutes, as to whether a mail arrives a server (step 15_1). When a received mail arrives, information of the sender of the received mail is down loaded from the server (step 15_2). It is retrieved in accordance with the down loaded information of the sender as to whether the sender is registered in the association table between the sender and the doll movement data, and also it is retrieved in accordance with the down loaded information of the sender as to whether the key word, which is registered in the association table, exists in the received message (step 15_3). When it is decided that the sender of the received message is registered in the association table, or the key word, which is registered in the association table, exists in the received message, it is determined as to the sender or the priority associated with the key word, and movement data associated with the priority is transmitted to the doll movement control program 10 (cf. Fig. 13), so that the doll moves in accordance with the movement data (step 15_4).

In this case, the user of the message receiving side can recognize, prior to reading a message, priority of the message, and thus it is possible to check only high priority of message, for example, the urgent message.

While it has been explained that the doll moves in accordance with the priority, it is acceptable to include a mode in which a doll does not move in case of low priority.

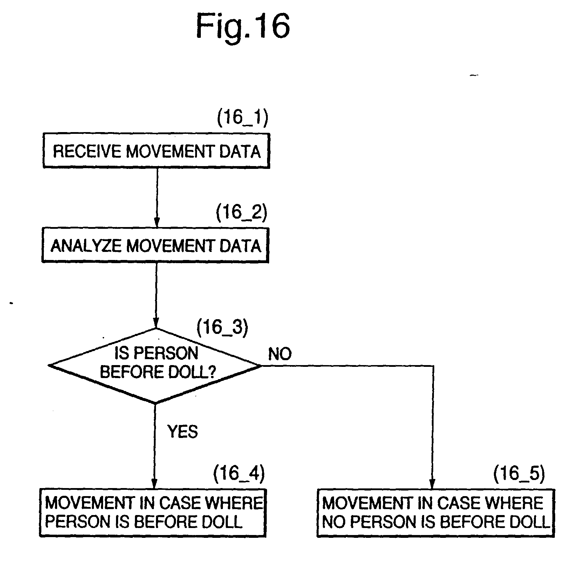

Fig. 16 is a flowchart useful for understanding a processing in the event that a doll is provided with a sensor for detecting an existence of a person before the doll.

In the doll movement control program 10 shown in, for example, Fig. 3, when movement data is received (step 16_1), the movement data is analyzed in the operation pattern analyzer unit 11 (step 16_2). At that time, sensor information detected by the sensor monitor unit 13, that is, information as to whether a person is before the doll, is considered, and movement data, which is different in accordance with the matter as to whether a person is before the doll, is transmitted via the input/output port management unit 12 to the doll (step 16_3). Thus, the doll performs different movements in accordance with the matter as to whether a person is before the doll (steps 16_4, 16_5). For example, even if the doll moves to indicate the fact that a mail has arrived, when a person is absent, this is not recognized by the user. For this reason, the movement of the doll is omitted. Thus, there is no need to move the doll in vain, and thereby preventing an energy loss and also reducing a malfunction of the doll.

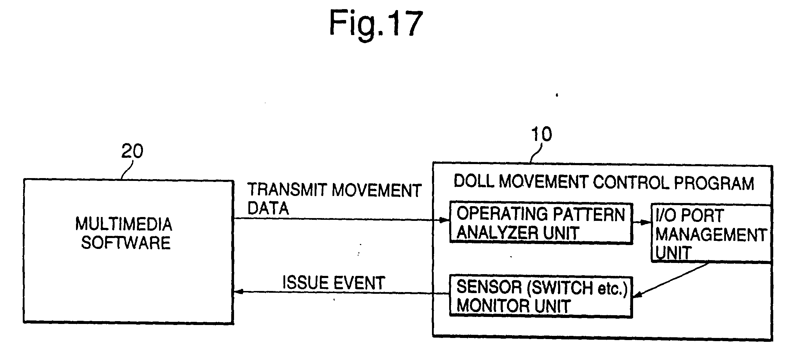

Fig. 17 is an explanatory view useful for understanding coordinated movements of a multimedia software and a doll.

The multimedia software is defined to be a software in which sound and a still picture and a dynamic picture are reproduced or displayed in accordance with time elapsed and an event offered from a user. This software has properties set forth below.

That is, according to the multimedia software, the lapse of time is internally measured, and an expression is varied on a time basis. For a measurement of the lapse of time, usually a timer is used, and a timer interruption is generated for each one mile sec, for instance.

In some multimedia software, a voltage is generated for each timer interruption from an output port to form a wave form output for the purpose of processing for reproducing an audio signal, and the like.

A software for an audio reproduction and a display of an animation, an animation software, and the like are an example of a multimedia software in which a predetermined expression is reproduced for each time.

On the other hand, a word processor software, a spreadsheet software, etc. are operative whenever a user makes an input, and offer a standby state when the operation is terminated. In those types of software, the operation is not managed on a time basis, and the higher operational speed is deemed to be more preferable. Those types of software are an example of a software which is out of the multimedia software in concept.

The present embodiment deals with the multimedia software as defined above, and a subject of the present embodiment is the multimedia software in which doll movement data is included.

When such a multimedia software 20 is executed in the CPU 101 of the information processing equipment 100 shown in Fig. 1, movement data is transmitted from the multimedia software 20 on execution to the doll movement control program 10 in accordance with the managed lapse of time. Thus, the doll performs movements coordinated with a progress state of the multimedia software. When the doll is operated (for example, the doll is hit on the head), the operation is detected, and an associated event is issued to the multimedia software 20.

While a deal of the event is different depending on a multimedia software, for example, there is performed such a process that a story is varied according as a user event is issued or not.

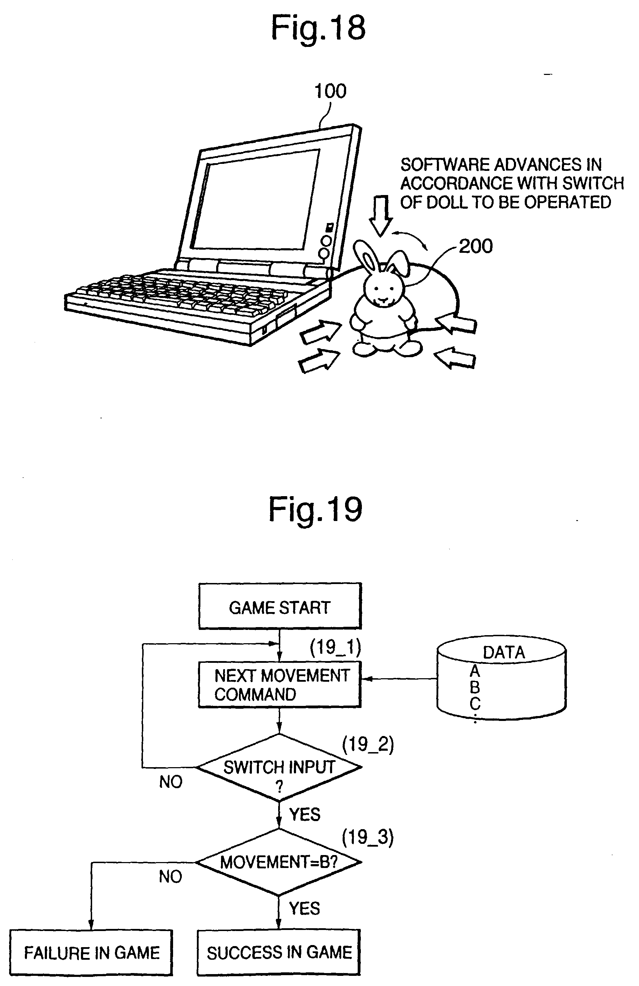

Fig. 18 is a perspective illustration showing a doll and an information processing equipment to which the doll is connected.

Inside the information processing equipment 100, the above-mentioned multimedia software or a game software makes progress, and in the half way a doll is operated. Then, for example, a story is advanced on a screen through an operation of the doll, or a game is advanced. In this manner, it is acceptable that an event is issued for a software now on progress, so that the software now on progress is operated in accordance with the issued event. Usually, such a user event is issued through an operation of a keyboard or a mouse. It is general, however, that the existing software does not accept an operational event of a doll. In view of the above, a child, for instance, is inhibited from touching a keyboard and a mouse, and is permitted to touch only a doll. This feature makes it possible to advance only a software for a child and prevent another software from inadvertently operating. In the event that it is difficult to hide the keyboard and the mouse from view of a child or to inhibit a child from touching those items, it is acceptable that a window of a software for a child is displayed on a screen on the top, wherein an event of the keyboard and the mouse is not accepted, and the software for a child is terminated when a password is inputted through the keyboard.

A plurality of sensors are built in the doll 200 shown in Fig. 18 so that a different event is issued in according to a portion of the doll to be operated. In this case, it is possible to issue various types of events and thereby executing a complicated processing.

Fig. 19 is a flowchart useful for understanding an example of coordinated movements of a doll's movement and an operation for the doll when a game program is run on an information processing equipment.

Doll movement data, which is prepared beforehand, is read, and a doll is operated in accordance with the doll movement data (step 19_1), and then it is determined as to whether the doll is operated (step 19_2). It is assumed that if the doll is operated while the doll performs a specific movement (here, movement: B), then the game is success (a user is a winner), and if the doll is operated while the doll performs movements other than the specific movement (movement: B), then the game is failure (the user is a loser).

In this manner, it is acceptable to perform progressing of a program and branching of a processing in accordance with cooperation between movements of the doll and operations of the doll.

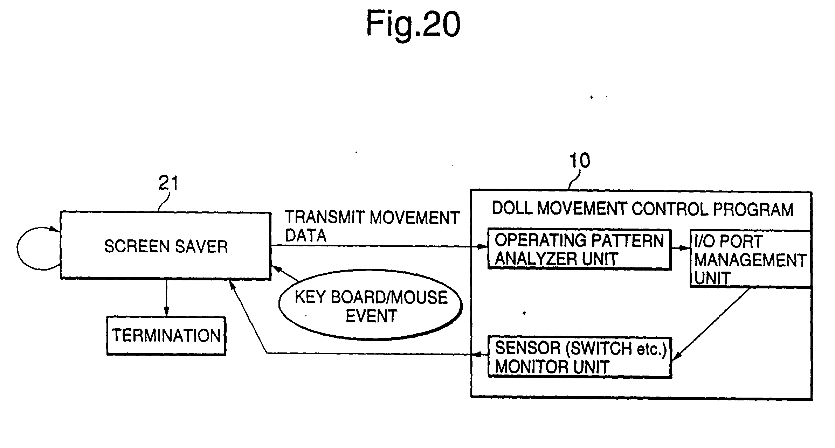

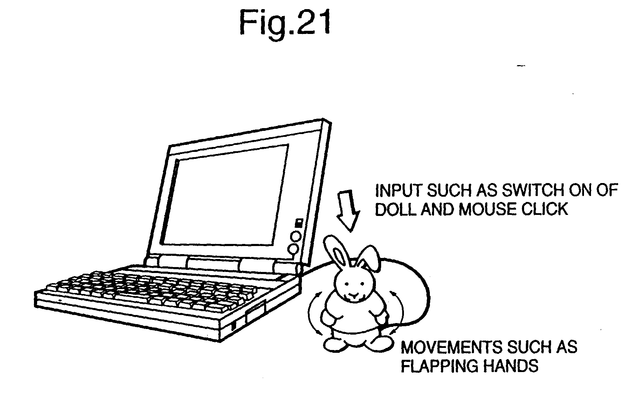

Fig. 20 is an explanatory view useful for understanding a processing for coordinated movements of a screen saver program and a doll's movement. Fig. 21 is a perspective view of an image processing equipment and a doll.

In the event that a state that the information processing apparatus 100 is not operated for some time is continued, a screen saver program 21 is activated. In accordance with the screen saver program 21, an animation, for instance, is displayed on a screen (not illustrated). Further, in accordance with the screen saver program 21, doll movement data is transmitted to the doll movement control program 10 so that a doll moves in accordance with the movement of the animation on the display screen. Thus, it is possible to make an execution of the screen saver program 21 more interesting having a sense of play. The screen saver program 21 is terminated by an operational event issued from the keyboard and the mouse. However, it is also acceptable that the screen saver program 21 is terminated by such an operation that a doll is hit on the head.

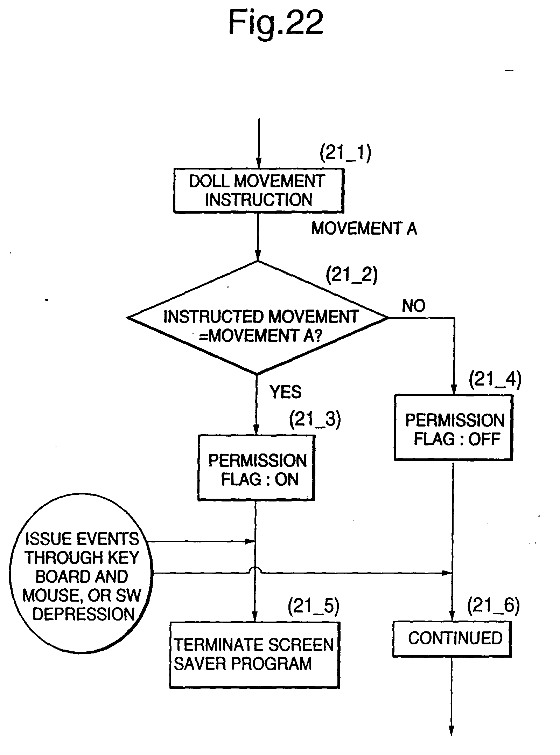

Fig. 22 is a flowchart useful for understanding an example of a way of terminating the screen saver program 21 shown in Fig. 20.

First, a doll movement instruction is issued (step 21_1), and the process goes to a step 21_2 in which it is determined as to whether the instructed movement is a specific movement (for example, movement A : a doll raises the hands). Only when it is decided that the instructed movement is the specific movement (movement A), a permission flag indicating that a termination of the screen saver program 21 is permitted is turned on (step 21_3). When it is decided that the instructed movement is not the specific movement (movement A), the permission flag is turned off (step 21_4).

When an operational event is issued through a key board and a mouse, or a doll, if the permission flag is turned on, then the screen saver program is terminated (step 21_5), and if the permission flag is turned off, then the screen saver program is continued (step 21_6).

Thus, it is possible to prevent the screen saver program from being inadvertently terminated and instead another program from running.

While it has been explained by way of example that the screen saver program is terminated, this is the similar as to the matter of a case where a password is inputted, without being restricted to the termination of the screen saver program.

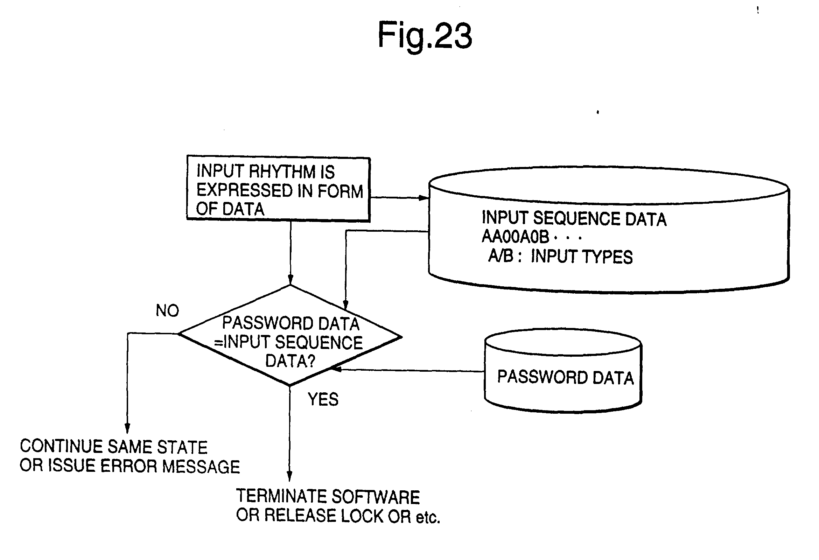

Fig. 23 is a flowchart useful for understanding an example of a way of inputting a password.

According to the example shown in Fig. 22, it is recognized to be the same as a password input that an operation is made while a doll performs a specific movement. On the other hand, according to the example shown in Fig. 23, it is recognized to be the same as a password input that a doll is operated in specific rhythm.

It is acceptable that the doll has a single sensor for detecting that the doll is hit on the head for instance, and when a rhythm of hitting the head meets a specific rhythm, it is regarded as a password input. Alternatively, it is also acceptable that the doll has a plurality of sensors, and when an operational sequence of a plurality of operations each corresponding to the associated one of the plurality of sensors meets a specific sequence, it is regarded as a password input. According to the example shown in Fig. 23, the above-mentioned two ways are combined. Specifically, the doll has two sensors A and B, and the associated two types of operations A and B are performed. When the operational sequence of the two types of operations and the operational rhythm are of a specific combination, it is regarded as a password input.

Here, first, 'A' and 'B', which are representative of the fact that the two sensors A and B respond, and 'O', which is representative of the fact that any of the two sensors A and B makes no response within a unit time, are given in the form of a pattern and are registered as passwords. When a doll is actually operated, then the operation is expressed in the form of data to generate input sequence data. The input sequence data is compared with the registered passwords. When a coincidence is detected, it is decided that the password is inputted, and as a result, for example, the screen saver program is terminated, or alternatively, a lock of a certain program is released so that the program is permitted to run. When the input sequence data is not coincident with the registered passwords, it is not regarded as the password input, and the same state is continued, or alternatively an error message is displayed.

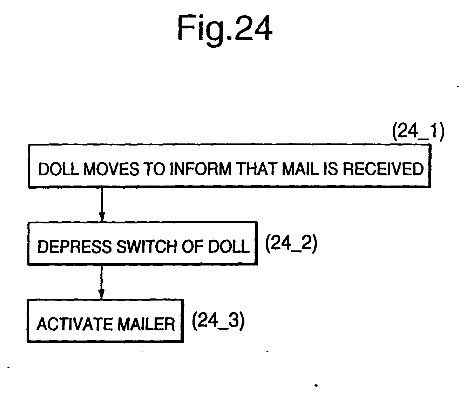

Fig. 24 is a flowchart useful for understanding an alternative embodiment of the present invention.

First, in step 24_1, a mail reception is checked periodically, for example, every ten minutes, and when it is detected that a mail is received, a doll moves to inform of the fact that a mail is received. The processing of step 24_1 is the same as one explained referring to Fig. 13.

When the doll is operated (for example, the doll is hit on the head) while the doll moves (step 24_2), an event to activate a program associated with a cause of a movement of the doll, that is, in this case, a mailer (a program for a mail preparation, display and transmission), is issued so as to activate the program or the mailer (step 24_3).

In this manner, the doll is operated while the doll moves, so that a program associated with a cause of a movement of the doll is activated. This feature makes it possible to reduce an operational load for a user.

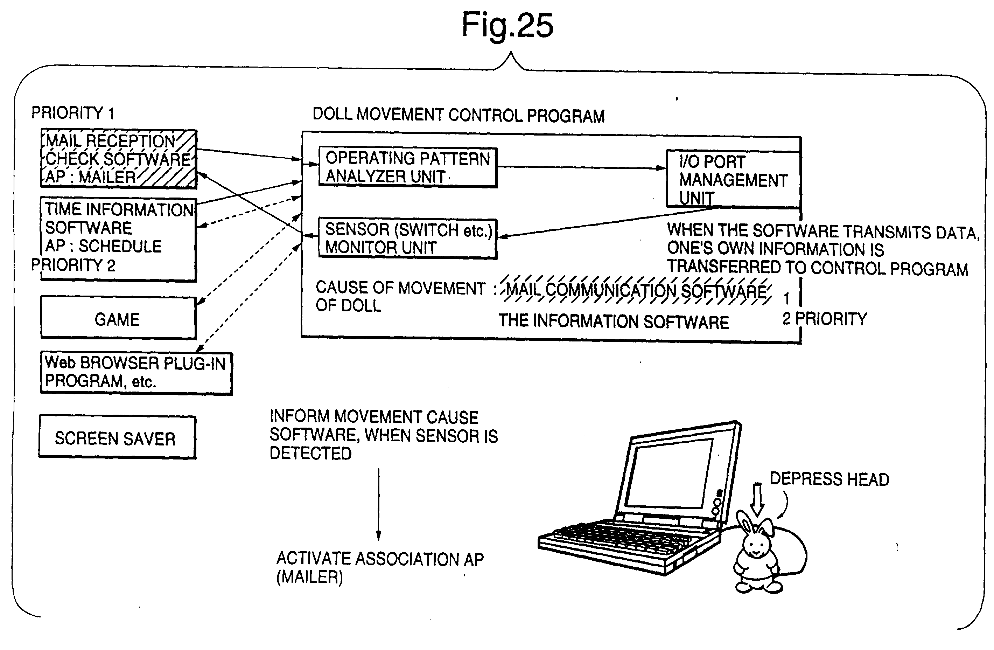

Fig. 25 is an explanatory view useful for understanding an operation in the event that there are a plurality of programs for operating a doll and a priority is applied to the programs.

As programs for moving a doll, a mail reception check software, a time informing software, a game software, an Web browser plug-in program, a screen saver, etc. are installed. It is assumed that the mail reception check software and the time informing software are activated one after another, and then doll movement data is transmitted to a doll movement control program. Each of the programs stores data indicating a priority of a doll movement. When the doll movement data is transmitted to the doll movement control program, the data as to the priority and data for specifying one's own self transmitted the doll movement data are transmitted together.

The doll movement control program analyzes data transmitted. In the even that a plurality of programs transmit doll movement data, only movement data, which is transmitted from a highest priority of program of the plurality of programs, is regarded as effective, and a doll is controlled in movement in accordance with the movement data. When the doll is operated (hit on the head) while the doll moves, an event is issued to the program associated with a cause of a movement of the doll. A program to be activated by the event thus issued knows the program from which the movement data is transmitted. According to the present embodiment, a mailer is activated by a mail reception check software received the event.

Thus, even in the event that there is a possibility that doll movement data are transmitted from a plurality of programs, an application of priority makes it possible to activate a program associated with a cause of a movement of the doll through an operation while the doll moves.

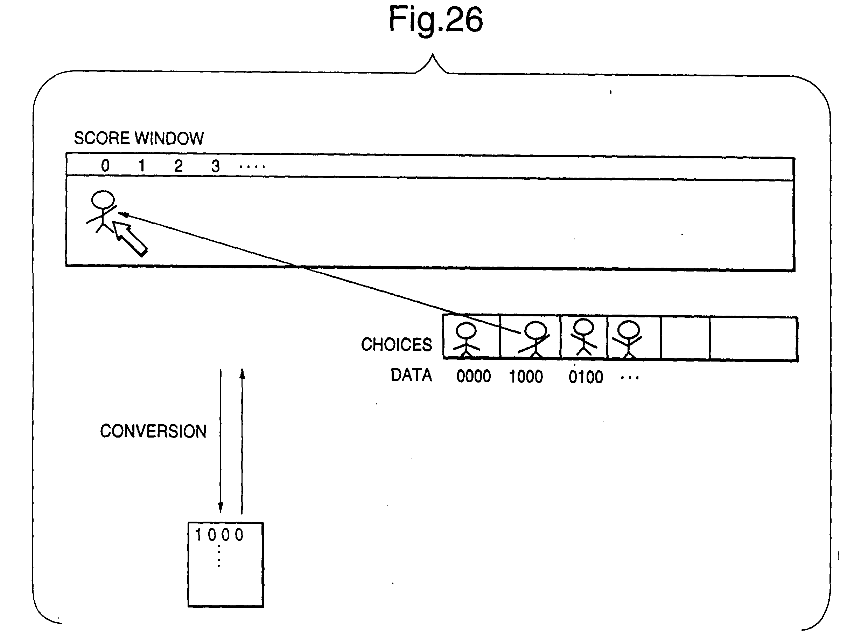

Fig. 26 is an explanatory view useful for understanding a technique of preparing an operating program for a doll, which consists of a series of operating program.

Here, on a display screen of the display unit 105 shown in Fig. 1, there are displayed a score window and choices. As to the choices, each illustration is representative of a movement of a doll. The mouse of the handler 104 (cf. Fig. 1) is operated to select a desired illustration (movement) from among the choices, and the selected illustration is arranged through drag and drop operations. It is permitted that the same illustration is arranged on a plurality of positions in the score window.

In this manner, a plurality of illustrations are arranged in the score window, so that a movement program consisting of a series of movement data according to the arrangement sequence is prepared.

Taking the technique shown in Fig. 26 makes it possible for a user to readily prepare a doll movement program.

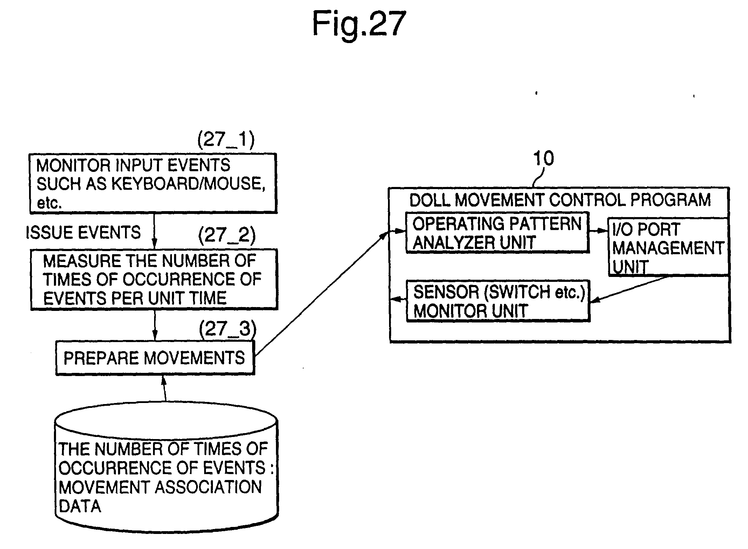

Fig. 27 is an explanatory view useful for understanding an example of a processing in which a doll is operated in accordance with an event such as a keyboard and a mouse.

The generation of events through operations of the key board, the mouse and the like constituting the handler 104 (cf. Fig. 1) is monitored (step 27_1), and a number of times of generation of events per unit time is measured (step 27_2). Association data of a number of times of generation of events per unit time with movements of a doll is prepared beforehand. The movement associated with a number of times of generation of events per unit time is selected and the associated movement data is transferred to the doll movement control program 10 (step 27_3). The doll movement control program 10 controls the movement of the doll in accordance with the movement data.

For example, when training for the operation of a key board or working for inputting of a text using a key board is performed, a doll moves in accordance with an operational speed of the key board. For example, when the key board is operated rhythmically at high speed, the doll moves rhythmically. And when the key board is stopped in operation, the doll stops it's action. This feature makes it possible to provide a sense of play for the training and the working, and thereby providing interest for the training and the working to an operator.

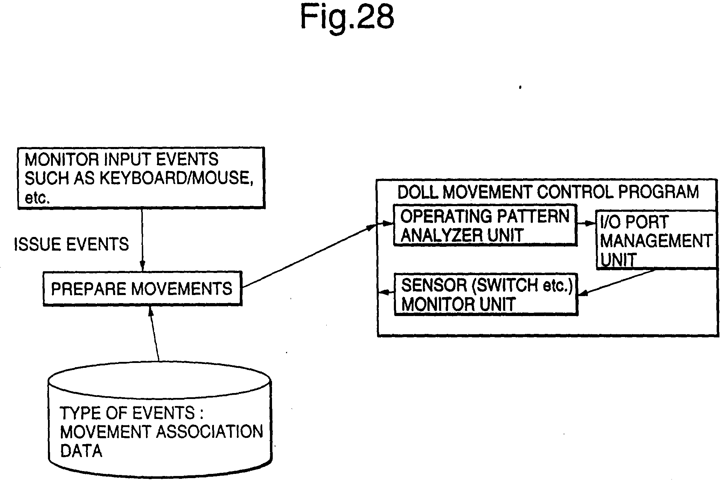

Fig. 28 is an explanatory view useful for understanding an alternative example of a processing in which a doll is operated in accordance with an event such as a keyboard and a mouse.

The association between types of events and movements of a doll is provided beforehand. Thus, when an event is generated, the associated movement data is transmitted to the doll movement control program, so that the doll moves in accordance with the movement data.

Also in this case, it is possible to provide a sense of play to training for operation of a key board and working for preparation of a text through operation of a key board.

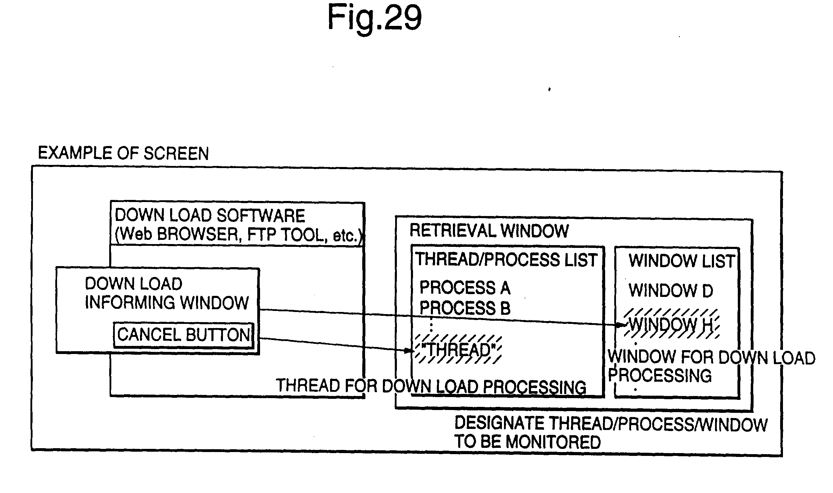

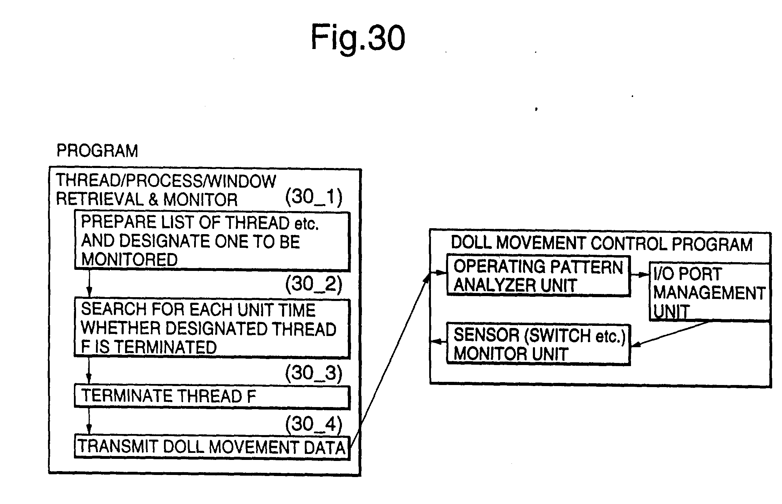

Fig. 29 is an explanatory view useful for understanding a processing in which a termination of a specific process according to a program is informed by movements of a doll. Fig. 30 is a flowchart useful for understanding a processing in which a termination of a specific process according to a program is informed by movements of a doll.

In an example of a screen shown in Fig. 29, a retrieval window is opened in which a thread/process list screen and a window list screen appear. Here, as thread/process for moving a doll at the time of termination, a thread F is designated, or a window H is designated. The thread F is a thread of a down load processing for a software, such as a Web browser or an FTP tool, for down loading a message. In execution of the thread, a down load informing window is opened. The window H is the down load informing window. That is, the thread F and the window H mean the same processing. In Fig. 29, both the thread F and the window H are designated. This means it is acceptable that the designation is performed either on the thread/process list screen and the window list screen.

In step 30_1 shown in Fig. 30, the thread or the window explained referring to Fig. 29 are designated. When such a designation is performed, it is searched for each unit time whether the termination of the designated thread F (or the close of the window H) is established (step 30_2). When it is detected that the thread F is terminated (the window is closed) (step 30_3), doll movement data is transmitted to the doll movement control program (step 30_4). Upon receipt of the doll movement data, the doll movement control program controls doll movement in accordance with the doll movement data.

In this manner, a termination of the thread and the process, or the window is monitored, and it is informed by movement of a doll that the processing is terminated. This feature makes it possible for a user to know a termination of the processing, even if the user works for another job without looking the screen for the processing. This process is particularly useful for a case of a processing which takes a lot of time.

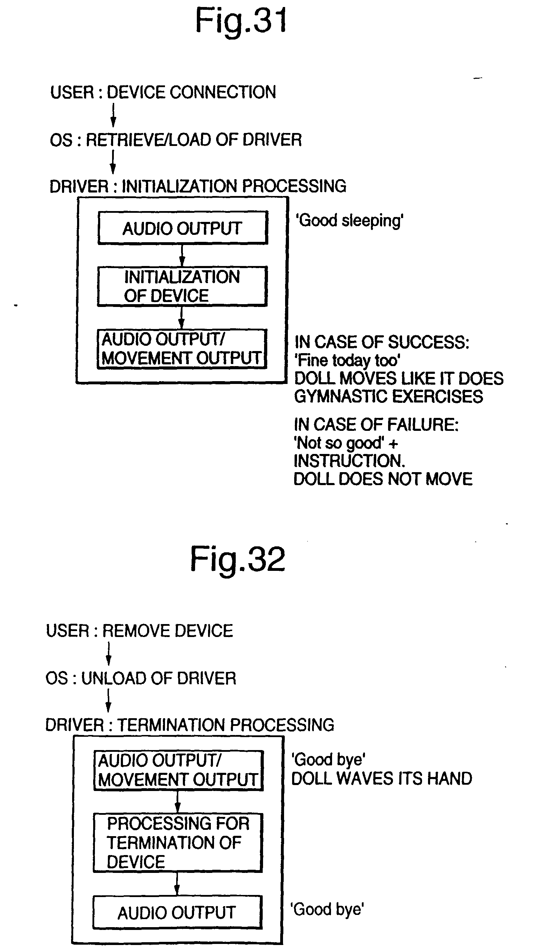

Fig. 31 is an explanatory view useful for understanding a processing in which a doll is connected to an information processing equipment.

When a doll is connected to an information processing equipment, a driver program for driving the doll is retrieved and loaded to perform an initialization. When the initialization process for the driver program is performed, for example, "I have good sleeping" is pronounced from the speaker 106 (cf. Fig. 1), and the initialization for the device is performed. In the event that the initialization is successful, for example, "Fine today too" is pronounced from the speaker 106, and in addition the doll moves like it do gymnastic exercises. On the other hand, in the event that the initialization is failure, for example, "Not so good" is pronounced from the speaker 106, and in addition a way as to how to cope with failure is explained. At that time, the doll does not move.

In this manner; at the time when a doll is connected to the information processing equipment, the doll is operated. This feature makes it possible to inform a user that the doll is properly connected to the information processing equipment, and also to give to the user an impression such that the doll just like lives.

Fig. 32 is an explanatory view useful for understanding a processing in which a doll is removed from an information processing equipment.

When a user removes a device (a doll), an unload (termination processing) of a driver is performed. In the termination processing of the driver, for example, "Good-bye" is pronounced, a doll performs a movement of waving its hand. Thereafter, the termination processing of the device is performed. According to the present example, "Good-bye" is pronounced again.

In the event that several cables are connected to the information processing equipment when a user removes a cable of a doll, in some case, it is not sure as to whether the removed cable is for the doll or another equipment. In such a case, operating the doll when the doll is removed from the information processing equipment makes it possible for the user to recognize the fact that the doll is removed from the information processing equipment. Thus, it is possible to give a sense of security.

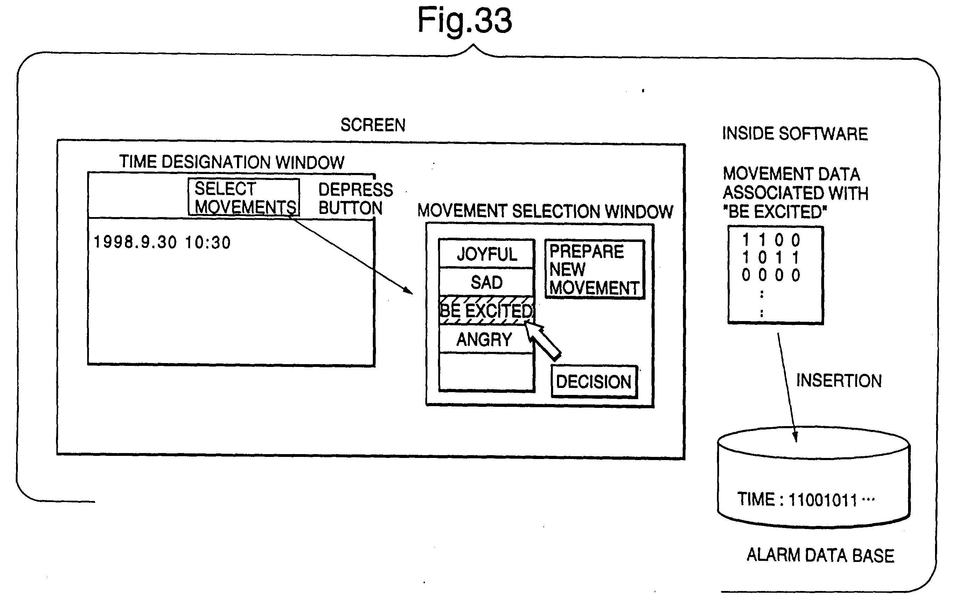

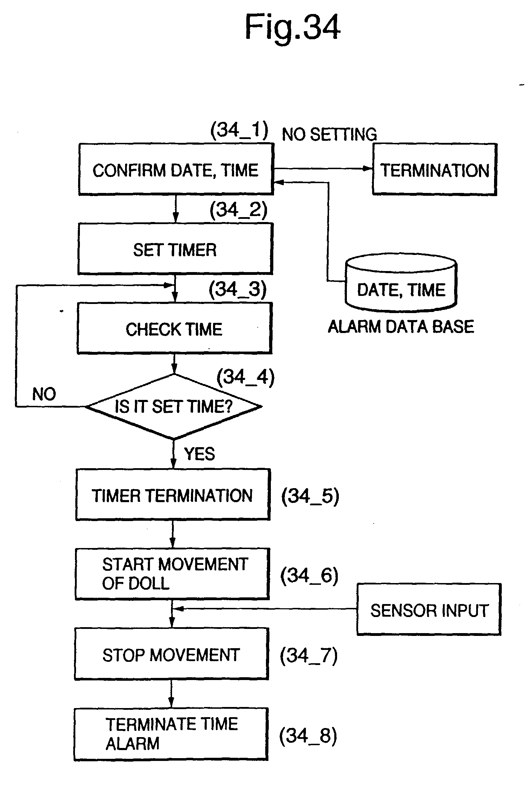

Fig. 33 is an explanatory view useful for understanding a time designation screen. Fig. 34 is a flowchart useful for understanding a processing in which a doll is operated at the designated time.

On a screen shown in Fig. 33, there is opened a time designation window on which a time designation is performed. According to the present example, 10: 30, September 9, 1998 is designated. After the time designation, when a "movement selection" button is clicked, then a movement selection window is opened so that a movement of a doll is selected on the movement selection window. Here, "be excited" of movements is selected. Then the designated time is associated with movement data corresponding to "be excited" and is stored in an alarm data base.

In a time alarm program shown in Fig. 34, date and time of the alarm data base are confirmed (step 34_1). When no set of time is established, the program is terminated immediately. When set of time is established, a timer for counting a difference of time between the set date and time and the current date and time is set (step 34_2). Thereafter, a time check is periodically performed as to whether the timer is in time up (step 34_3). When the timer reaches the set time or the timer is in time up (step 34_4), the timer is terminated (step 34_5), and a movement of a doll is started (step 34_6). When the dill is hit on the hand, the movement of the doll is stopped (step 34_7), and then the alarm program is terminated (step 34_8).

In this manner, using a movement of a doll as a time alarm makes it possible to know it reaches a set time, avoiding a necessity for always looking at a display and excluding the fear that it troubles those around one as in an alarm informing with sound. Further, it is possible to add a sense of play and an interest to the time alarm. Incidentally, in the above description, it has been explained that reaching the set time is informed by a movement of a doll. However, for example, in the event that it is known that a user works looking at the display screen at the set time, or it is known that generation of sound does not trouble those around one, it is acceptable that reaching the set time is informed the user taking a movement of a doll and a screen display or an audio alarm together.

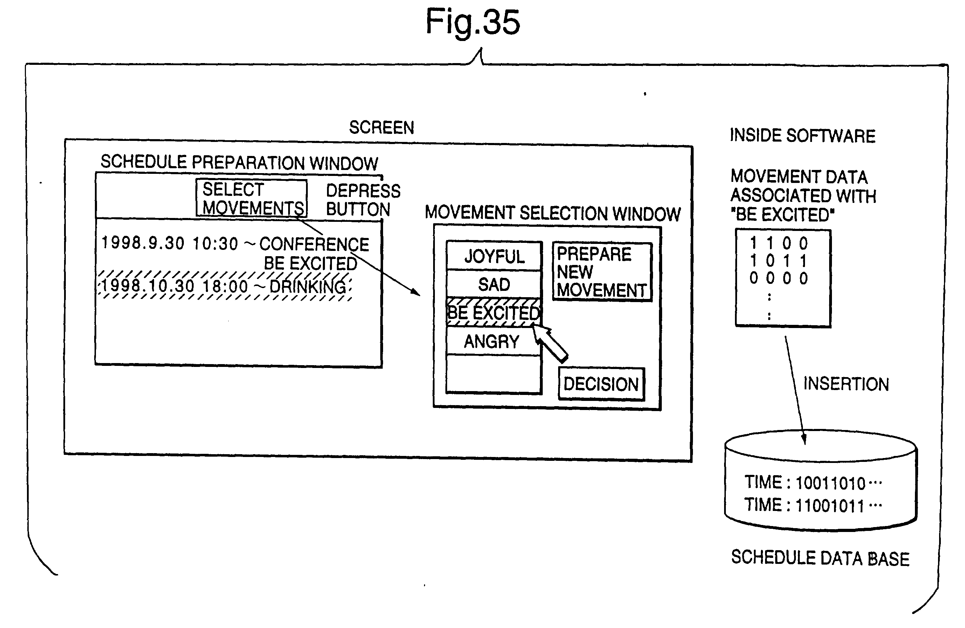

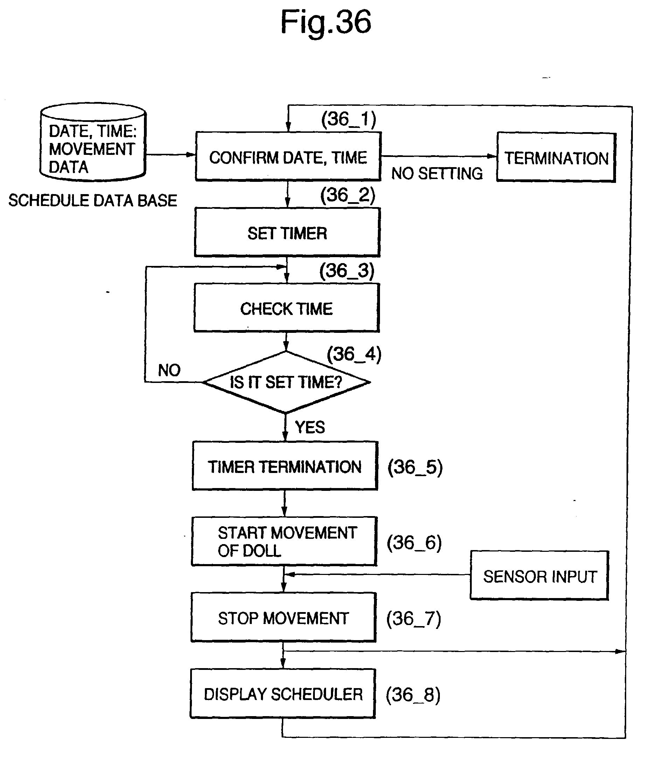

Fig. 35 is an explanatory view useful for understanding a schedule preparation screen. Fig. 36 is a flowchart useful for understanding a processing in which a doll is operated at the time associated with the designated schedule.

On the screen shown in Fig. 35, there is opened a schedule preparation window in which schedules are written. Either one or a plurality of schedules of the schedules written in the schedule preparation window are selected for the time alarm, and thereafter, a "movement selection" button is clicked to open a movement selection window so that a movement of a doll is selected. Thus, movement data associated with the selected movement is written into a schedule data base in association with a schedule on which the time alarm is to be performed.

In a scheduler coordinated time alarm program shown in Fig. 36, first, a schedule data base is retrieved to determine as to whether a schedule associated with movement data exists (step 36_1). When the schedule associated with movement data exists in the schedule data base, the earliest starting time of a schedule and the associated movement data are read, and a timer for counting a time from the current time to the starting time of the schedule is set (step 36_2). Thereafter, a time check is periodically performed as to whether the timer is in time up (step 36_3). When the timer reaches the set time or the timer is in time up (step 36_4), the timer is terminated (step 36_5), and a movement of a doll is started (step 36_6). When the dill is hit on the hand, the movement of the doll is stopped (step 36_7), and then the scheduler is displayed on a screen so that the schedule is confirmed in association with the fact that the doll moved (step 36_8).

In this manner, the time alarm coordinated with the scheduler program is implemented by movements of a doll.

Incidentally, in the above description, it has been explained that a doll moves at the time of starting of the designated schedule. However, it is acceptable that the doll is set so as to move a predetermined time, for example, 30 minutes, before the starting time.

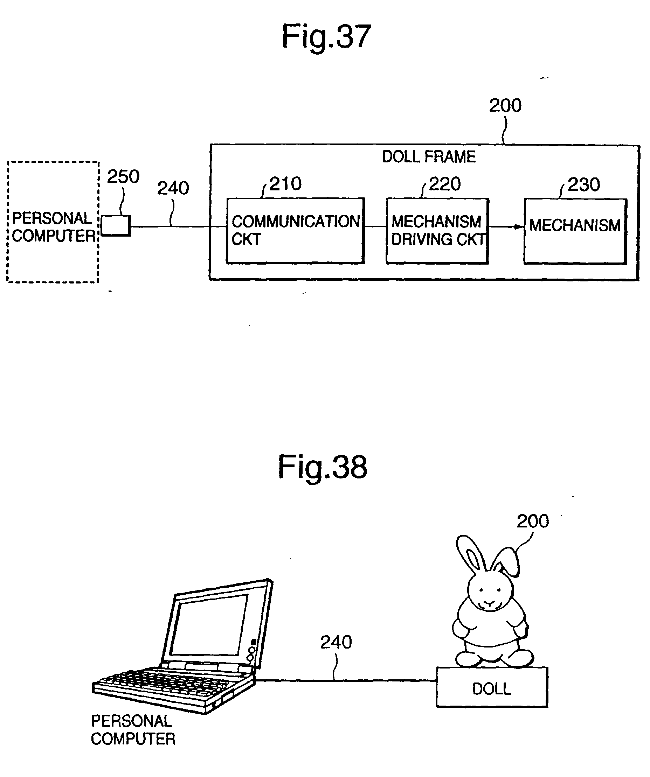

Fig. 37 is a construction view of a doll which is an example of a pseudo biological equipment according to the present invention. Fig. 38 is a perspective view of a doll connected to a personal computer. In Fig. 38, there is shown a block below the doll. The block shows, for example, an internal circuit or a mechanism of a doll as shown in Fig. 37, which does not appear outside actually. In Fig. 38 and the following figures of the similar type, a circuit or a mechanism, which is to be incorporated into a doll, is depicted outside the doll for convenience of drawing.

A doll 200 is connected via a communication line 240 and a connector 250 to a personal computer. Inside the doll 200 there are provided a communication circuit 210 (corresponding to the interface 201 in Fig. 1) for communicating with the personal computer, a mechanism driving circuit 220 (corresponding to the driving circuits 203, 204, 205 in Fig. 1), and a mechanism 230 (corresponding to the driving means 206 in Fig. 1). Incidentally, here, the sensor (switches, etc.) are omitted.

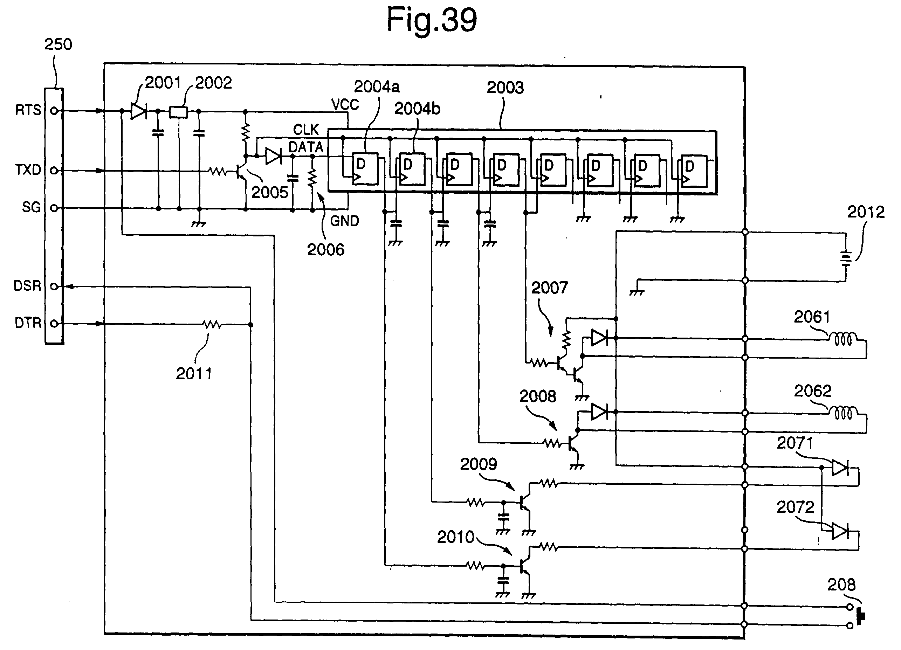

Fig. 39 is a circuit diagram of a doll.

An RTS terminal of a connector 250 receives a signal of +15V from a personal computer. The signal of +15V is supplied via a diode 2001 to a voltage converter circuit 2002 for converting voltage 15V to voltage 5V. The voltage 5V is supplied to a shift register 2003 comprising flip-flops 2004a, 2004bp,···, which are connected in series, as a power source Vcc.

An TXD terminal of the connector 250 receives a pulse train signal representative of movement data for a movement of a doll. Here, a binary of movement data is expressed by a width of a pulse. A detail will be described later. The pulse train signal applied through the TXD terminal is supplied via a transistor 2005 to the shift register 2003 in the form of a clock, and in addition supplied via the transistor 2005 and a signal converting circuit 2006 to the first stage flip-flop 2004a of the shift register 2003 in the form of data.

The doll is provided with a coil 2061 for moving the head, a coil 2062 for moving the hands, an LED 2071 for emitting green light to offer a pale complexion, and an LED 2072 for emitting red light to offer a reddish complexion. A power is supplied from an internal battery 2012 to those elements. A control of turn-on and turn-off of a power supply to those elements is performed by transistor switches 2007, 2008, 2009 and 2010, which are turned on or off in accordance with data stored in the flip-flops 2004a, 2004b,··· constituting the shift register 2003, respectively.

An SG terminal of the connector 250 is a ground terminal.

The doll is provided with a sensor (switch) 208 which turns on when the doll is hit on the head. The sensor 208 is disposed between the RST terminal of the connector 250 and a DSR terminal of the connector 250. The DSR terminal is connected via a resistance 2011 with a DTR terminal.

The DTR terminal receives basically a signal of - 15V from a personal computer. Thus, the voltage of -15V is applied via the resistance 2011 to the DSR terminal. When the sensor 208 is turned on, the voltage of +15V of the RST terminal is applied to the DSR terminal. At the personal computer end, the voltage of the DSR terminal is monitored. When the voltage of the DSR terminal is -15V, it is determined that the sensor 208 is turned off. When the voltage of the DSR terminal is +15V, it is determined that the sensor 208 is turned on.

It is noted that Fig. 39 shows an example of an internal circuit structure of a doll, and thus such a circuit structure is not applicable to all embodiments which will be described later.

In the above description, the basic embodiment of a doll has been explained referring to Figs. 37 to 39. Hereinafter, there will be explained various embodiments of a doll.

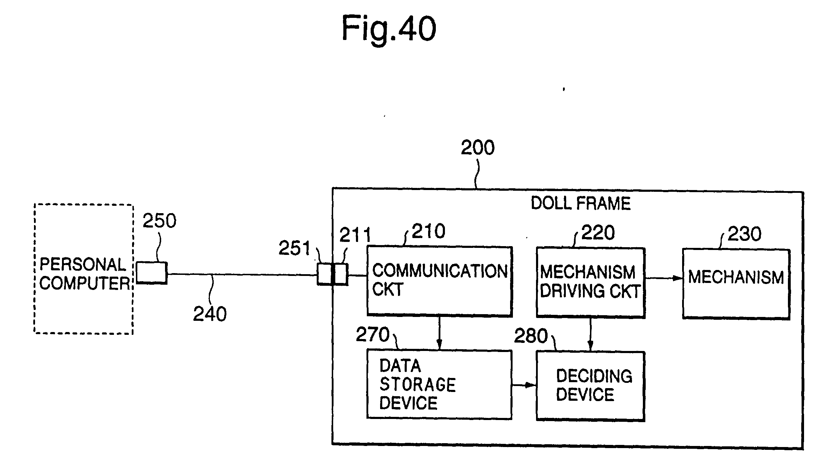

Fig. 40 is a block diagram of an example of an internal constitution of a doll.

According to the internal constitution of a doll shown in Fig. 40, in addition to the communication circuit 210, the mechanism driving circuit 220, and the mechanism 230, there are provided a data storage device 270 and a deciding device 280. Further, at the end of the doll 200 of a communication line 240 there is provided a connector 251, and the doll 200 is provided with a connector 211 coupled to the connector 251.

The doll 200 is a portable type of doll which may be separated from a personal computer when the connector 211 is detached from the connector 251.

In the state that the doll 200 is connected to the personal computer, movement data for moving the doll, and condition data representative of condition for moving the doll, for instance, schedule data representative of time of moving the doll, are transmitted from the personal computer to the doll 200. These data are received by the communication circuit 210 and then stored in the data storage device 270.

It is assumed that thereafter the doll 200 is separated from the personal computer.

The deciding device 280 periodically refers to the condition data, for example, the schedule data of the data stored in the data storage device 270 to decide as to whether the condition is satisfied, for example, it reaches the set time. When it is decided that the condition is satisfied, for example, it reaches the set time, movement data is read from the data storage device 270, and is transferred to the mechanism driving circuit 220, so that the doll 200 moves in accordance with the movement data.

Thus, according to the doll of the present embodiment, since the doll is portable, it is possible to inform a user of that whenever it is necessary. Further, since the doll is movable, for example, even in a situation that the doll is put into a pocket of a user, it is possible to inform the user of that. When the doll is connected again to the personal computer, the condition data (schedule data) of the doll may be renewed.

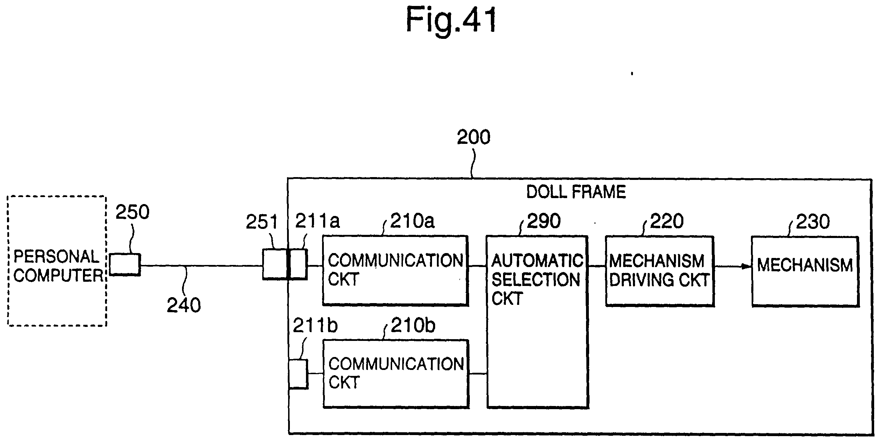

Fig. 41 is a block diagram of an alternative example of an internal constitution of a doll.

In this embodiment, there are provided two communication circuits 210a and 210b, and two connector 211a and 211b associated with the communication circuits 210a and 210b, respectively, which may be coupled with the connector 251 of the doll 200 side of the communication line 240. Further, according to the present embodiment, there is provided an automatic selection circuit 290 for selecting either one of the communication circuits 210a and 210b to couple the selected one with the mechanism driving circuit 220.

The communication circuits 210a and 210b are suitable for mutually different communication systems. For example, the communication circuit 210a is a communication circuit based on a standard of RS232C which is one of current general communication systems. The communication circuit 210b is a communication circuit based on a standard of USB which will be the main currents in future. The automatic selection circuit 290 automatically decides as to which one of the communication circuits 210a and 210b is connected to the personal computer to couple the decided one with the mechanism driving circuit 220.

According to the present embodiment, it is permitted to use the doll in either case where an interface of the personal computer is based on a standard of RS232C, or is based on a standard of USB, thereby greatly expanding general-purpose properties.

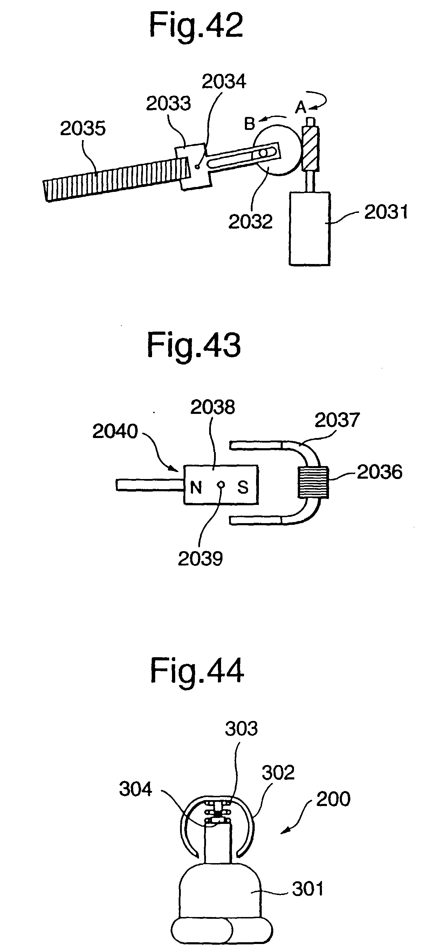

Fig. 42 is an illustration of an example of a driving mechanism of a doll.

In Fig. 42, there is shown a mechanism for moving an arm up and down by a motor. When a shaft of a motor 2031 rotates in a direction of an arrow A, a gear 2032 rotates in a direction of an arrow B. Then, an arm 2033 rotatively moves on a spindle 2034 up and down. The arm 2033 comprises a coil spring 2035 on the top. The coil spring 2035 serves as an arm of a doll. Accordingly, when the motor 2031 is driven, an arm (or hand) of the doll moves up and down. Since the arm of the doll comprises the coil spring 2035, even if the doll is under such circumstances that movements of the arm are restricted, as such a case where the doll is put into a narrow place, for example, a pocket, the coil spring 2035 elastically deforms when the motor 2031 is driven, and this offers a buffer effect. Thus, according to the driving mechanism of the present embodiment, it is possible to prevent the arm or the driving mechanism for driving the arm from being destroyed. In case of a portable type of doll as explained referring to Fig. 40, when the arm put into, for example, a pocket, moves, the moving pressure will be transferred to the body of a user. Thus, the user can recognize through the body that the doll moves.

Fig. 43 is an illustration of an alternative example of a driving mechanism of a doll.

A driving mechanism shown in Fig. 43 comprises an electromagnet 2037 having a coil 2036 through which an alternating current flows, and an arm 2040 constituting an arm of a doll, which arm has a permanent magnet 2038 pivoting on a spindle 2039. When an alternating current flows through the coil 2036 of the electromagnet 2037, the arm 2040 reciprocates on the spindle 2039 up and down. According to the driving mechanism shown in Fig. 43, while the arm is constituted of a hard material, it is driven by an electromagnetic force. This offers a buffer effect, and thus in a similar fashion to that of Fig. 42, even if movements of the arm is restricted, it is prevented that the driving mechanism is destroyed. Also in this case, when the arm put into, for example, a pocket, moves, the moving pressure will be transferred to the body of a user. Thus, the user can recognize through the body that the doll moves.

Fig. 44 is an illustration of an example of a structure of a doll.

A doll 200 comprises a main frame 301 and a head 302. The head 302 is mounted on the top of the main frame 301 through a coil spring 303. A sensor (switch) 304 is fixed on the top of the main frame 301. When the head 302 is depressed, the sensor 304 turns on. When a hand of a user is detached from the head 302 of the doll 200, the head 302 returns to an original position by an enabling force of the coil spring 303, so that the sensor 304 turn off.

The head of the doll 200 is part easiest to touch for a use since it stands out. Thus, in case of a structure that the doll is operated to issue an event to a personal computer, the use of a sensor, which is operable when the head easy to touch for a use is depressed, makes it possible to provide a doll excellent in operability.

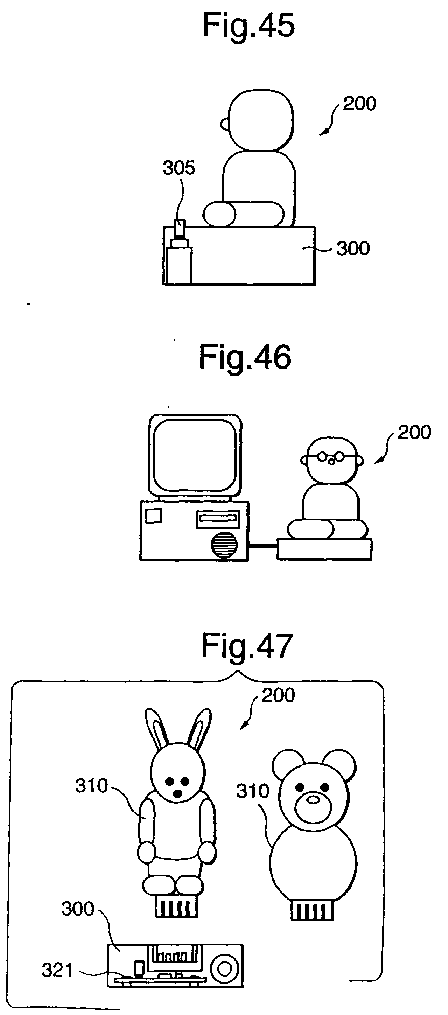

Fig. 45 is an illustration of an alternative example of a structure of a doll.

A doll 200 is provided with a pedestal 300 having a sensor 305 of a push-button type.

The pedestal 300 is made for the purpose of fixing the doll thereon, and thus is manufactured strongly. Further, the pedestal is one of places easy for a user to put one's hand. Thus, provision of the sensor on the pedestal makes it possible to provide a sensor reliably operable extending over a long period of time.

Fig. 46 is an explanatory view useful for understanding coordinated movements between a personal computer and a doll.

A doll 200 shown in Fig. 46 does not include a microphone and a speaker. Accordingly, if there is a need to generate a voice synchronized with a movement of a doll for instance, a speaker of a personal computer side is used.

In this manner, with respect to functions (for example, a microphone and a speaker) with which an equipment (for example, a personal computer) is provided, devices which the equipment is equipped with are utilized, and the doll is not equipped with such devices. This feature makes it possible to implement a compactness of a doll. In the event that the doll is constructed into a portable type of doll, it will be easy to carry the doll. Further, according to the present embodiment, it is possible to provide an inexpensive doll.

Fig. 47 is an illustration of a further alternative example of a structure of a doll.

A doll 200 shown in Fig. 47 comprises a pedestal 300 and a plurality of doll main frames 310. Each of the doll main frames 310 may be detachably mounted on the pedestal 300. Thus, it is possible for a user to select a desired one of the plurality of dolls.

Here, a control circuit 321 for controlling movements of the doll 200 in communications with a personal computer is accommodated in the pedestal 300.

In this manner, it is possible to exchange the doll main frames 310. This feature makes it possible to select a desired one of the dolls. Further, according to the doll of the present embodiment, the control circuit 321 is incorporated into the pedestal 300. This feature makes it possible to provide an inexpensive doll main frame, and also it is possible for a user to select a desired one of the plurality of dolls.

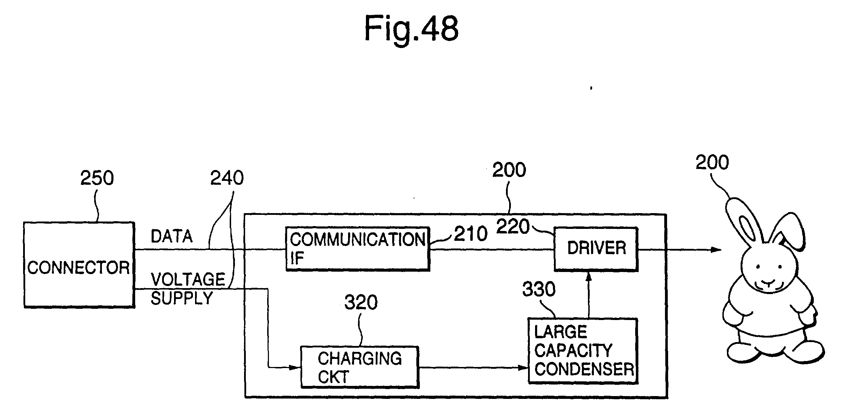

Fig. 48 is a block diagram of a further alternative example of an internal constitution of a doll.

According to the internal constitution of a doll shown in Fig. 48, in addition to a communication interface (the communication circuit shown in Fig. 37) 210 and a driver (the mechanism driving circuit shown in Fig. 37) 220, there are provided a charging circuit 320 and a large capacity condenser 330. Further, in Fig. 48, as communication lines 240, there are shown a transmission line for data and a transmission line for voltage signal as well.

A doll 200 receives a voltage supply from a party (for example, a personal computer), so that an electric power according to the voltage is charged via the charging circuit 320 to the large capacity condenser 330. When the doll is operated, the electric power charged in the large capacity condenser 330 is supplied to the driver 220 so that the doll is operated.

According to this structure, even in a situation that it is difficult to supply through a line connected to a personal computer and the like a voltage which is sufficient to drive the doll, an electric power is stored on the doll side and is available. Thus, an object of the doll to be connected may be expanded. Further, according to this structure, there is no need to incorporate a battery into the doll, thereby contributing to the low cost for the doll.

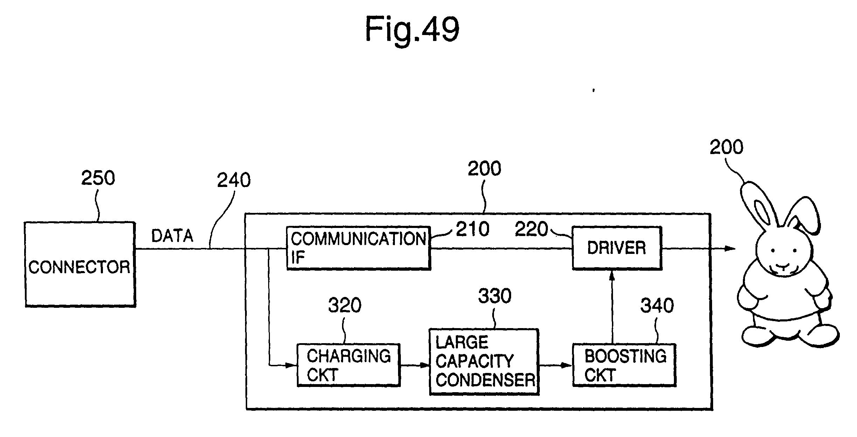

Fig. 49 is a block diagram of a furthermore alternative example of an internal constitution of a doll.

A difference of the block diagram shown in Fig. 49 from the block diagram shown in Fig. 48 is that the charging circuit 320 is connected to a data transmission line 240, and the doll 200 further comprises a boosting circuit 340.

According to the internal constitution of the doll shown in Fig. 49, an electric power supplied through the data transmission line 240 is charged on the large capacity condenser 330 by the charging circuit 320. When the doll 200 is operated, the electric power charged on the large capacity condenser 330 is boosted by the boosting circuit 340.

In case of the use of the data transmission line, a large electric power cannot be obtained. In the event that the doll 200 is operated occasionally, however, it is acceptable that a small electric power on the data transmission line is stored. According to the present embodiment, since the boosting circuit 340 is provided, it is possible to drive a doll, even in the event that a voltage on the data transmission line is low, or a charge is incomplete.

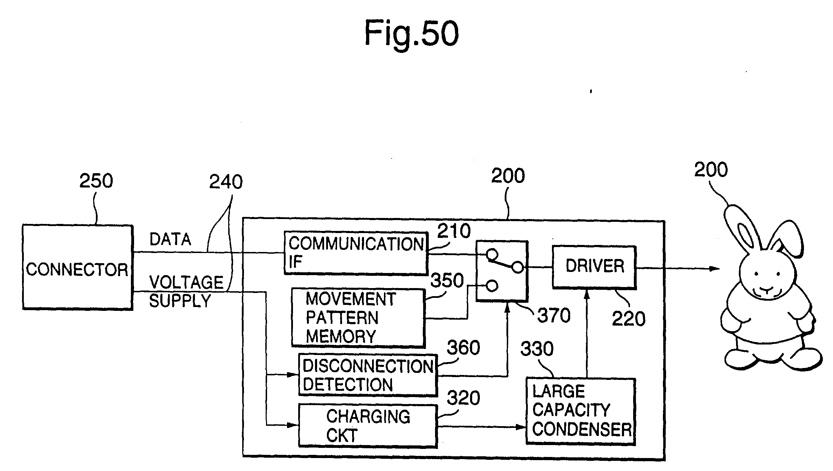

Fig. 50 is a block diagram of a still further alternative example of an internal constitution of a doll.

A difference of the block diagram shown in Fig. 50 from the block diagram shown in Fig. 48 is that the internal constitution of the doll 200 further comprises a movement pattern memory 350 for storing movement data to operate the doll 200 in a certain movement pattern, a disconnection detecting circuit 360 for detecting as to whether the connector 250 is disconnected from a party equipment (for example, a personal computer), and a change over switch 370.

When the connector 250 is connected to the personal computer or the like, the change over switch 370 is switched over to the communication interface 210 side. When it is detected by the disconnection detecting circuit 360 that the connector 250 is disconnected from the personal computer or the like, the change over switch 370 is switched over to the movement pattern memory 350 side, so that the movement data stored in the movement pattern memory 350 is read and fed to the driver 220. Thus, the doll 200 is driven by the electric power which has been stored in the large capacity condenser 330 before the connector 250 is disconnected from the personal computer or the like.

That is, according to the present embodiment, the doll 200 is operated in response to a detection of the fact that the connector 250 is disconnected from the personal computer or the like.

According to the present embodiment, by a movement of the doll, a user can confirm a disconnection of a doll from the equipment (e.g. a personal computer) to which the doll is connected, and thereby providing a sense of security. Further, since the doll is operated after the doll is disconnected, the doll looks like a living thing. Thus, it is possible to provide interest to a user. According to the present embodiment, since residual energy stored in the large capacity condenser 330 at the time point when the doll is disconnected is used, there is no need to prepare an additional power source (e.g. a battery) for enabling the doll after disconnected. Thus, it is possible to provide an inexpensive doll.

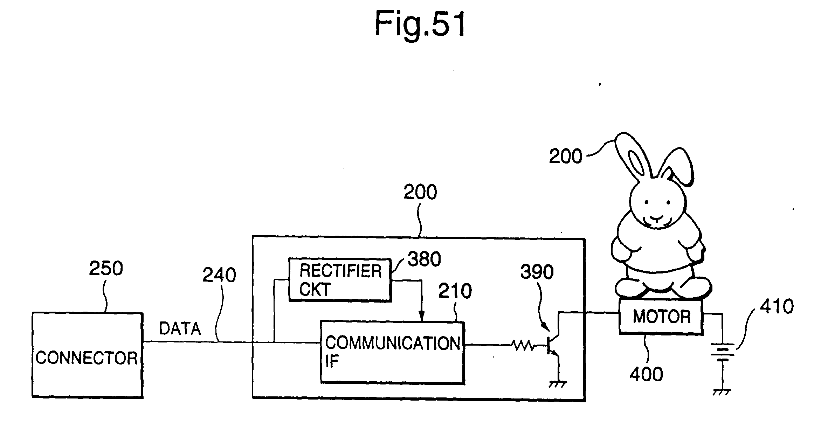

Fig. 51 is a block diagram of a still furthermore alternative example of an internal constitution of a doll.

An internal constitution of the doll 200 further comprises a rectifier circuit 380 for rectifying an electric power of a party (e.g. a personal computer) transmitted via a communication line (data) 240 and supplying the same to a communication interface 210. In other words, the communication interface 210 is activated by the electric power rectified by the rectifier circuit 380, that is, the electric power supplied from the party (e.g. a personal computer).

The doll 200 incorporates thereinto a motor 400 for activating the doll 200. When a transistor switch 390 is turned on in response to an output of the communication interface 210, an electric power is supplied from a battery 410 incorporated into the doll 200 to the motor 400.

According to the present embodiment, the doll 200 incorporates thereinto the battery 410; nevertheless the communication interface 210, or a control circuit portion for controlling movements of the doll 200, is constructed in such a manner that it is activated with an electric power supplied from the connected party, for example, a personal computer. And, there is provided such a circuit arrangement that when an electric power is not supplied to the communication interface 210, the communication interface 210 surely offers a non-operable state. Consequently, according to the present embodiment, in the event that the doll is not connected to the party such as a personal computer, the motor 400 is driven, and thereby saving a power dissipation. Hence, it is possible for a maker side to sale the doll loading the battery without a power dissipation. Thus, a user side may save one trouble for loading a battery and readily set up the doll. Further, since attachment and detachment of the connector 250 serves as a main switch, there is no need to provide an additional main switch, and thereby reducing a manufacturing cost.

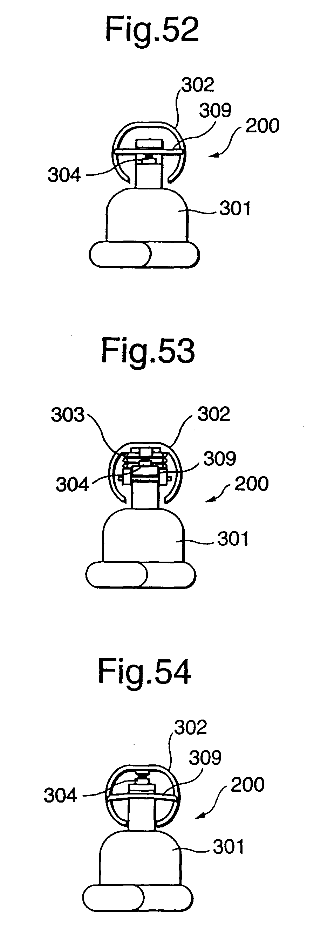

Fig. 52 is an illustration of a further alternative example of a structure of a doll.

A doll 200 comprises a main frame 301 and a head 302. The head 302 is supported by a rocking shaft 309 which is rotatively and horizontally mounted on the main frame 301. Right under the rocking shaft 309, there is disposed a push button of a sensor 304. When the head 302 is depressed, the rocking shaft 309 depresses the push button, so that the sensor 304 detects the fact that the head is depressed. The push button is so arranged that when the depressing force is removed, the push button returns upward by a spring (not illustrated). Thus, when a user detaches one's hand from the head 302, the head 302 returns upward by a spring force.

According to the present embodiment, with a simple structure of the doll, it is possible to surely detect the fact that the head 302 is depressed to the main frame 301.

Fig. 53 is an illustration of a furthermore alternative example of a structure of a doll.

A doll 200 comprises a main frame 301 and a head 302. The head 302 is supported via a coil spring 303 on a rocking shaft 309 which is rotatively and horizontally mounted on the main frame 301. On the upper part of the main frame 301, there is disposed a sensor 304 having a push button. When the head 302 is depressed, the push button is depressed by an inner wall of the head 302. When a user detaches one's hand from the head 302, the head 302 returns upward by a spring force of the coil spring 303.

According to the present embodiment, with a simple structure of the doll, it is possible to surely detect the fact that the head 302 is depressed.

Fig. 54 is an illustration of a still further alternative example of a structure of a doll.

A doll 200 comprises a main frame 301 and a head 302. The head 302 is supported by a rocking shaft 309 which is rotatively and horizontally mounted on the main frame 301. On the upper part of the main frame 301, there is disposed a sensor 304 having a push button structure. According to the doll of the present embodiment, the rocking shaft 309 is provided with a spring force. Thus, when the head 302 is depressed, the rocking shaft 309 is deformed so as to depress the head 302. At that time, the push button is depressed by an inner wall of the head 302, so that it is detected that the head 302 is depressed. When a user detaches one's hand from the head 302, the rocking shaft 309 returns to the home position, so that the head 302 returns upward.

According to the present embodiment, with a simple structure of the doll, it is possible to surely detect the fact that the head 302 is depressed.

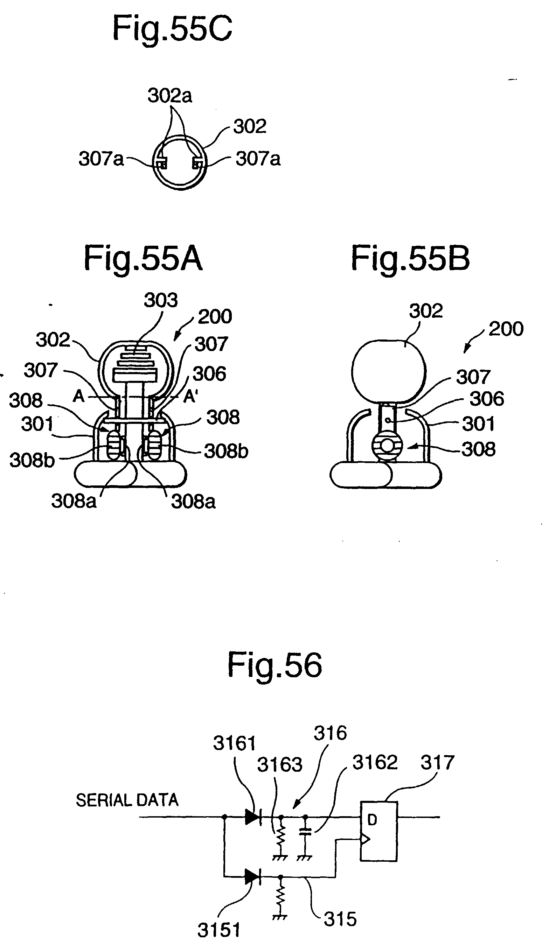

Figs. 55 (A), (B) and (C) show illustrations of a still furthermore alternative example of a structure of a doll.

Figs. 55 (A), (B) and (C) are a front view of the doll showing an internal structure, a side view of the doll showing an internal structure, and a sectional view taken along the line A-A' of Fig. 55 (A), respectively.

A doll 200 comprises a main frame 301 and a head 302. The head 302 is supported via a coil spring 303 on the upper part of the main frame 301. The doll 200 is provided with a pair of levers 307 each extending vertically which are supported by a spindle 306 fixed on the main frame 301. On the lower part of each of the levers 307, there is provided a driving unit 308 for rotatively moving the associated lever 307. Each of the driving units 308 comprises a permanent magnet 308a and an electromagnet 308b. When a current flows through the electromagnet 308b, the levers 307 rotatively move on the spindle 306. As shown in Fig. 55 (C), with respect to each of the levers 307, an upper part 307a of the lever 307 is engaged with a click 302a of the inside of the head 302, so that the head 302 moves when the levers 307 rotatively move.

According to the present embodiment, when both the pair of driving units 308 for driving the pair of levers 307 are simultaneously driven, the head 302 is inclined forward. On the other hand, when only one of the driving units 308 is optionally driven, the doll turns the head toward the right or the left.

Provision of the driving mechanism shown in Figs. 55 (A)-(C) for a doll makes it possible for even a small doll to move the head with a simple structure. And in addition, the head of the doll can moves up and down and right and left. This feature makes it possible to give an impression of various movements to a user, and thereby enhancing a sense of play and an interest.

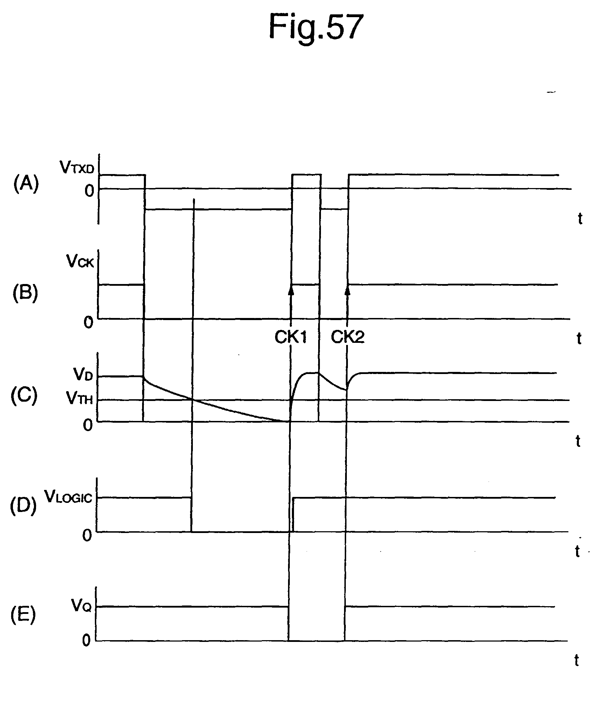

Fig. 56 is a circuit diagram of a data receiving circuit for receiving data from an equipment, such as a personal computer, which is connected to a doll, of the inside of the doll. Fig. 57 is a wave form chart of signal waves of the circuit shown in Fig. 56.

A signal V_{TXD}, which is distinguished in logic in accordance with a pulse width, as shown in part (A) of Fig. 57, is fed from an equipment such as a personal computer to the doll. Here, a width of a "L (low) level" of the signal V_{TXD} is referred to as the pulse width. The signal V_{TXD} is fed via a clock signal line 315 shown in Fig. 56 to a clock input terminal of a flip-flop 317. A clock to be fed to the clock input terminal is expressed by a signal waveform shown by a clock V _{CK} of part (B) of Fig. 57, since a diode 3151 is disposed on the clock signal line 315. The flip-flop 317 is so arranged to receive data in timing of rising of the clock. Consequently, according to the embodiment shown in Fig. 57, regardless of the pulse width, data is received in any timing of rising of CK1 and CK2 shown in Fig. 57.

On the other hand, the signal V_{TXD} , which is fed from an equipment such as a personal computer via a signal conversion circuit 316 to a data input terminal of a flip-flop 317, is expressed by a signal V_{D} of a waveform shown in part (C) of Fig. 57. The signal conversion circuit 316 comprises a condenser 3162 and a resistance 3163. As shown in part (C) of Fig. 57, while a charge onto the condenser 3162 is performed at high speed, a discharge is performed slowly through a diode 3161 and the resistance 3163.

Part (D) of Fig. 57 shows a waveform in which the charge and discharge waveform of part (C) of Fig. 57 is binarized with a threshold T_{TH} for data receiving of the flip-flop 317. As shown in part (D) of Fig. 57, an "L" level of data is received by the flip-flop 317 in timing of CK1, and an "H" level of data is received by the flip-flop 317 in timing of CK2, so that an output V_{Q} of the flip-flop 317 offers one shown in part (E) of Fig. 57.

In other words, by adopting the signal conversion circuit 316, the flip-flop 317 takes in different logic of data in accordance with the pulse width (as mentioned above, the width of an "L" level is referred to as the pulse width). The flip-flop 317 shown in Fig. 56 corresponds to the flip-flop 2004a of the shift register 2003 shown in Fig. 39. Thus, when a signal representing a logic with a difference of a pulse width is transmitted from a connected equipment such as a personal computer, it is possible that a logic distinguished by a difference of the pulse width is converted into a logic according to a voltage of "H" level or "L" level and then received by the shift register. In addition, according to this circuit structure, there is no need to prepare a large scale timing circuit for generating clocks, which is needed for a conventional circuit arrangement.

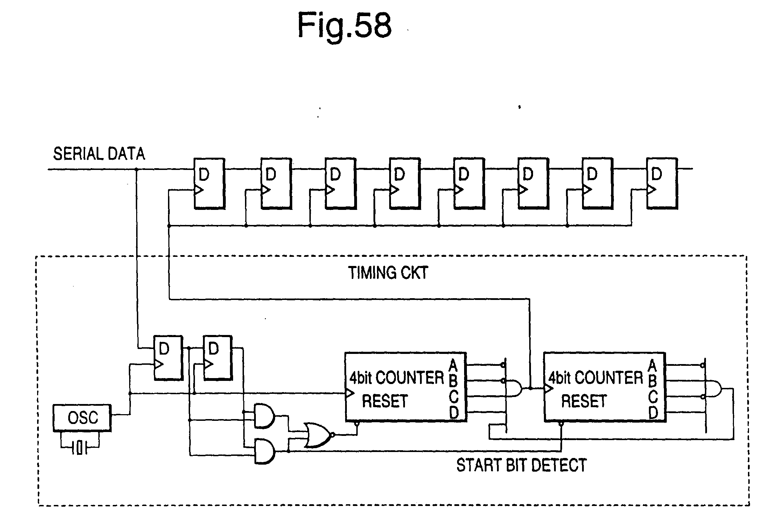

Fig. 58 is a view showing an example of a serial data receiver according to the earlier technology.

The serial data receiver shown in Fig. 58 is comparative example with the circuits shown in Fig. 39 or Fig. 56. Therefore, detailed explanations will be omitted. In effect, according to the earlier technology, there is needed a large scale timing circuit as shown in Fig. 58. And since an oscillator is always operated, a power dissipation is large. On the contrary, according to the circuit arrangements as shown in Fig. 39 or Fig. 56, there is needed a pulse of a wide pulse width, since a logic is discriminated in accordance with the pulse width. Thus, a transmission rate of data is lowered. In the event that this is permitted, however, it is possible to greatly reduce a circuit scale at the receiving side, and also to greatly save the power dissipation.

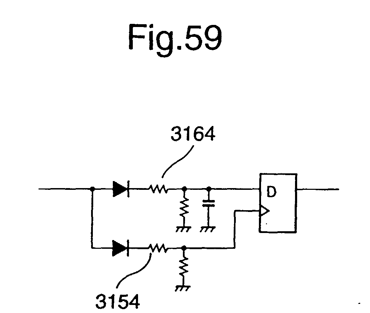

Fig. 59 is a circuit diagram of a modification of the circuit shown in Fig. 56.

As compared with the circuit shown in Fig. 56, the circuit shown in Fig. 59 is provided with two pieces of resistance 3154 and 3164 for voltage dividing.

The voltage range for a serial signal transmission line is generally ±15V. As shown in Fig. 59, in the event that a voltage is lowered by a resistance division, it is possible utilize an IC (for example, flip-flops or shift registers: generally, 3V-6V) which is low in withstand voltage and is inexpensive.

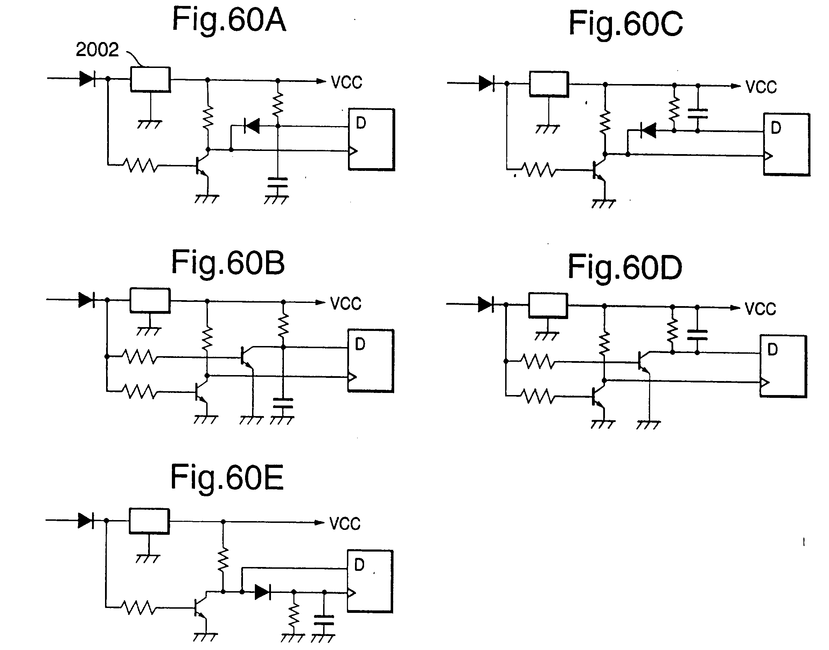

Figs. 60(A)-60(E) show examples of various types of circuits which adopt basic ideas explained referring to Figs. 58 and 59.

In those examples of various types of circuits, a voltage transformer circuit 2002 is a circuit for converting an input voltage to an internal voltage, for example, 5V (cf. Fig. 39). In connection with the circuit shown in Fig. 56, in the waveforms shown in Fig. 57, the width of the "L" level is defined as the pulse width. On the other hand, in some of the examples of the various types of circuits shown in Figs. 60(A)-60(E), oppositely, the width of the "H" level is defined as the pulse width. Detailed explanation on the individual examples of the circuits will be omitted. In any way, those circuits are implemented based on such a concept that a distinction of the logic is performed in accordance with the pulse width, and the clock generation circuit (the timing circuit) is simplified or omitted. Indeed, various types of circuits are implemented based on such a concept as described above.

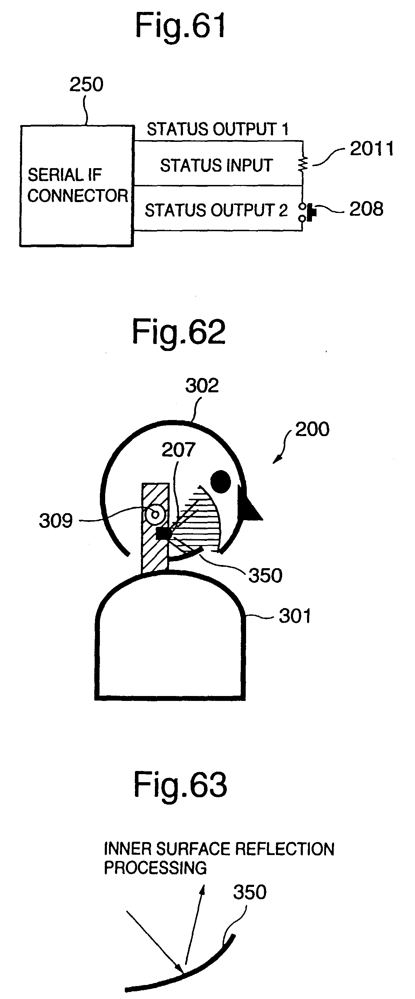

Fig. 61 is a construction view of a sensor (switch) incorporated into a doll.

Here, as a voltage signal to be transmitted from a connected equipment such as a personal computer via a connector 250 to a doll end, two signals of a status output 1 and a status output 2 are provided. On the other hand, as a signal to be transmitted from the doll end to the connected equipment such as a personal computer, a status input is provided. A sensor (switch) 208 is disposed between the status output 2 and the status input. A resistance 2011 is disposed between the status output 1 and the status input (cf. Fig. 39).

From the connected equipment such as a personal computer, as the status output 1 and the status output 2, -15V and +15V are transmitted to doll end, respectively. Consequently, when the sensor 208 is turned off, the status output 1, that is, -15V is fed to the status input. And, when the sensor 208 is turned on, the status output 2, that is, +15V is fed to the status input. Accordingly, it is possible for the personal computer or the like to detect the turn on and off of the sensor 208 through monitoring the voltage level of the status input.

According to a communication system, for example, RS232C, as the status output 1 shown in Fig. 61, it is possible to output +15V instead of -15V. Therefore, when the voltage of the status input is detected while the voltage of the status output 1 is swung up and down, it is possible for the connected equipment such as a personal computer to detect the connection of the doll.

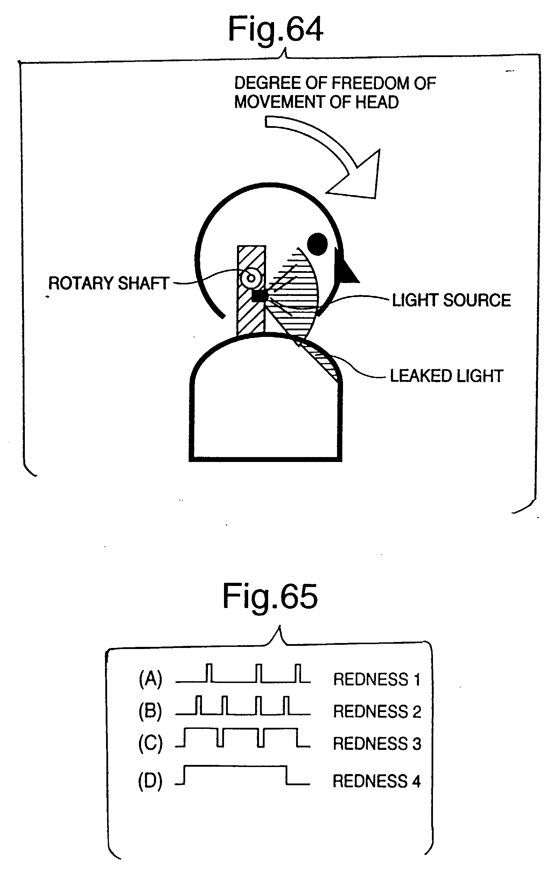

Fig. 62 is an illustration of an example of a construction of a head of a doll. Fig. 63 is an extended view of part of the head of the doll shown in Fig. 62. Fig. 64 is an illustration of a comparative example of a construction of a head of a doll.

As shown in Fig. 62, a doll 200 comprises a main frame 301 and a head 302. The head 302 is supported by a rocking shaft 309 which is mounted on the main frame 301, so that the head 302 rotatively moves back and forth (the doll shakes its head back and forth). In order to ensure this movement, there is provided a gap between the main frame 301 and the head 302.

The head 302 may be produced from, for example, milky-white plastics so that a user can feel brightness when the head 302 is illuminated inside. Inside the head 302, there is provided an LED 207. When the LED 207 turns on, the front side (the face) of the head is irradiated from the inside. The LED 207 comprises, as shown in Fig. 39, two LED's for red and green indeed, but here, for the purpose of simplification, only one LED is shown.

As shown in Fig. 62, an opaque reflecting plate 350 is disposed on the lower part of the head (the front side of the neck). As shown in Fig. 63, the opaque reflecting plate 350 is subjected to a reflection treatment on the inner surface.

No use of the opaque reflecting plate 350 brings about a leakage of light of the LED from the neck portion, as shown in Fig. 64, and thus the breast portion of the main frame 301 is illuminated. This makes it difficult to distinguish the color of the face from the color of the main frame. On the contrary, in the event that the opaque reflecting plate 350 is provided as shown in Fig. 62, only the complexion of the doll is changed when the LED 207 turns on. This brings about a sharpness of the color boundary between the face and the body of the doll. Thus, the use of the opaque reflecting plate 350 makes it possible to emphasis the change of the complexion of the doll.

According to the embodiment shown in Fig. 62, as shown in Fig. 63, the opaque reflecting plate 350 is subjected to a reflection treatment on the inner surface. This feature makes it possible to effectively concentrate beams of light emitted from the LED 207 on the area of interest (or the face). And also it is possible to save the power dissipation, and to use an indispensable LED which is low in efficiency of the light emission.

Fig. 65 is a wave form chart of luminescence wave forms of LED's for controlling a degree of variations of color of a face of a doll. Here, it is assumed that an LED emitting light of red is used, and a degree of variations of color of a face of a doll is referred to as redness 1, redness 2, ··· .

There are prepared four waveforms shown in parts (A), (B), (C) and (D) of Fig. 65 which are mutually different in duty ratio. The waveforms (A), (B), (C) and (D) are associated with redness 1, redness 2, redness 3 and redness 4, respectively. When a degree of variations of color of a face of a doll is set up, a time sequence data, for example, "00010001···" ('0' represents a turn-off of the LED, and '1' represents a turn-on of the LED), according to the set redness, is transmitted from the connected equipment such as a personal computer to the doll. Thus, in the doll end, the LED turns on or off in accordance with the transmitted time sequence data or anyone of the waveforms (A), (B), (C) and (D) shown in Fig. 65. In this manner, changing the duty ratio of the turn-on and turn-off of the LED makes it possible to easily control a degree of variations of color of a face of a doll.

As mentioned above, according to the present invention there are provided a pseudo biological equipment having both a sense of play and a practical performance, and an information processing apparatus consisting of a combination of an information processing equipment and the pseudo biological equipment.

While the present invention has been described with reference to the particular illustrative embodiments, it is not to be restricted by those embodiments but only by the appended claims. It is to be appreciated that those skilled in the art can change or modify the embodiments without departing from the scope of the present invention.

As will be apparent from the above description, the term "pseudo biological equipment" refers to any doll or toy capable of exhibiting movement or changes in appearance. Typically, but not exclusively, the doll or toy will resemble an animal or human.

The terms "main frame equipment" and "main frame portion" refer to a processing unit of a host device (e.g. a PC) and to a body of the doll or toy respectively.

The term "radio" used with reference to communication between the host device and the doll/toy, embraces all forms of wireless communication.

The phrase "existence of a person before said pseudo-biological equipment" refers to the presence of a user, for example seated at a desk on which the doll or toy is placed.

The term "handler" may refer to an operating system of the host device.

## Claims

1. An information processing apparatus comprising a main frame equipment having a display unit for displaying a message, and a pseudo biological equipment performing a movement according to movement data, said pseudo biological equipment being connected to said main frame equipment through a cable or a radio,
wherein said message is arranged to include the movement data representative of movements of said pseudo biological equipment, and
said main frame equipment comprises a movement data extracting unit for extracting the movement data from said message, and a movement control unit for transmitting to said pseudo biological equipment the movement data extracted by said movement data extracting unit or movement data prepared in accordance with the extracted movement data.

2. An information processing apparatus according to claim 1, wherein said main frame equipment comprises a communication unit for receiving the message arranged to include the movement data transmitted via a network.

3. An information processing apparatus according to claim 1 or 2, wherein said message is arranged to include movement data based on a control statement distinguished from display data displayed on said display unit, and
said movement data extracting unit extracts the movement data from said message, and transmits to said display unit display data excepting the extracted movement data.

4. An information processing apparatus according to claim 1 or 2, wherein said message is one in which the movement data is included in display data to be displayed on said display unit, and
said movement data extracting unit extracts the movement data included in the display data, and transmits to said display unit the display data including the extracted movement data.

5. An information processing apparatus according to any preceding claim, wherein a piece of movement data included in said message is associated with a series of movements of said pseudo biological equipment, and
said movement data extracting unit extracts the movement data from said message, and produces a series of movements data representative of a series of movements of said pseudo biological equipment in accordance with the extracted movement data.

6. An information processing apparatus according to claim 2, wherein said pseudo biological equipment has a sensor for detecting an operation of said pseudo biological equipment, and
said communication unit receives the message transmitted via the network, and transmits a response message to the operation of said pseudo biological equipment to the network directed to a sender of the received message.

7. An information processing apparatus according to claim 2, wherein said pseudo biological equipment has a sensor for detecting an existence of a person before said pseudo biological equipment, and
said communication unit receives the message transmitted via the network, and transmits a response message including a detection result of said sensor to the network directed to a sender of the received message.

8. An information processing apparatus according to claim 6, wherein said communication unit transmits a response message including movement data instructing movements of said pseudo biological equipment to the network directed to the sender.

9. An information processing apparatus according to claim 7, wherein said communication unit transmits a response message including movement data instructing movements of said pseudo biological equipment to the network directed to the sender.

10. An information processing apparatus comprising: a main frame equipment having a communication unit connected to a network for receiving a message transmitted via the network, and a display unit for displaying a message; and a pseudo biological equipment performing a movement according to movement data, said pseudo biological equipment being connected to said main frame equipment through a cable or a radio,
wherein said main frame equipment comprises a movement control unit responsive to receipt of the message for transmitting the movement data to said pseudo biological equipment.

11. An information processing apparatus according to claim 10, wherein said main frame equipment has an association table between senders of received messages and movement data, and
said movement control unit transmits the movement data associated with the sender of the received message to said pseudo biological equipment.

12. An information processing apparatus according to claim 10, wherein said main frame equipment has an association table between priority specified by senders of messages or keywords of the messages and movement data, and
said movement control unit transmits the movement data associated with the priority of the received message to said pseudo biological equipment.

13. An information processing apparatus comprising a main frame equipment, and a pseudo biological equipment performing a movement according to movement data, said pseudo biological equipment being connected to said main frame equipment through a cable or a radio,
wherein said pseudo biological equipment has a sensor for detecting an existence of a person before said pseudo biological equipment, and performs different movements in accordance with a detection result of said sensor.

14. An information processing apparatus comprising a main frame equipment adapted for executing multimedia software operative in accordance with a predetermined flowchart associated with time elapsed and an event issued from a user, and a pseudo biological equipment performing a movement according to movement data, said pseudo biological equipment being connected to said main frame equipment through a cable or a radio,
wherein said main frame equipment comprises a movement control unit for transmitting to said pseudo biological equipment movement data representative of a movement coordinated with the multimedia software in execution by said main frame equipment.

15. An information processing apparatus comprising a main frame equipment adapted for executing software, and a pseudo biological equipment performing a movement according to movement data, said pseudo biological equipment being connected to said main frame equipment through a cable or a radio,
wherein said pseudo biological equipment has a sensor for detecting an operation of said pseudo biological equipment, and
said main frame equipment has an event issuing unit responsive to an operation of said pseudo biological equipment for issuing a predetermined event to a predetermined program to be executed in said main frame equipment.

16. An information processing apparatus according to claim 15, wherein in the event that said pseudo biological equipment is operated while said pseudo biological equipment performs a specific movement, said event issuing unit issues a predetermined event to a predetermined program to be executed in said main frame equipment.

17. An information processing apparatus according to claim 15 or 16, wherein in the event that said pseudo biological equipment is operated in a specific operation pattern, said event issuing unit issues a predetermined event to a predetermined program to be executed in said main frame equipment.

18. An information processing apparatus comprising a main frame equipment adapted for executing software, and a pseudo biological equipment performing a movement according to movement data, said pseudo biological equipment being connected to said main frame equipment through a cable or a radio,
wherein said pseudo biological equipment has a sensor for detecting an operation of said pseudo biological equipment, and
said main frame equipment has a movement control unit responsive to issue of a predetermined event for transmitting the movement data to said pseudo biological equipment, and an event issuing unit wherein in the event that said pseudo biological equipment is operated while said pseudo biological equipment performs a movement, said event issuing unit issues an event for actuating a software associated with a cause of the movement of said pseudo biological equipment.

19. An information processing apparatus according to claim 17 or 18, wherein priority is applied to events involved in an cause of transmitting movement data to said pseudo biological equipment, and in the event that a plurality of events involved in a cause of transmitting movement data to said pseudo biological equipment are simultaneously or successively issued, said movement control unit transmits movement data associated with a higher priority of event to said pseudo biological equipment.

20. An information processing apparatus comprising a display unit having a display screen on which an image is displayed, a main frame equipment having a handler for designating a position on the display screen, and a pseudo biological equipment performing a movement according to movement data, said pseudo biological equipment being connected to said main frame equipment through a cable or a radio,
wherein said main frame equipment displays symbols representative of movements of said pseudo biological equipment on the display screen of said display unit, and has a movement data producing unit responsive to an operation of an arrangement of the symbols by said handler for producing a series of movement data arranged to operate said pseudo biological equipment in accordance with an operating sequence associated with an arrangement sequence of the symbols.

21. An information processing apparatus comprising a main frame equipment having a handler for issuing events, and a pseudo biological equipment performing a movement according to movement data, said pseudo biological equipment being connected to said main frame equipment through a cable or a radio,
wherein said main frame equipment has a movement control unit for transmitting to said pseudo biological equipment movement data according to an issuing rate of the events sequentially issued from said handler.

22. An information processing apparatus comprising a main frame equipment having a handler for issuing a plurality of types of events according to an operation, and a pseudo biological equipment performing a movement according to movement data, said pseudo biological equipment being connected to said main frame equipment through a cable or a radio,
wherein said main frame equipment has a movement control unit for transmitting to said pseudo biological equipment movement data according to the type of the event issued from said handler.

23. An information processing apparatus comprising a main frame equipment adapted for executing software, and a pseudo biological equipment performing a movement according to movement data, said pseudo biological equipment being connected to said main frame equipment through a cable or a radio,
wherein said main frame equipment has a movement control unit responsive to a termination of a predetermined work by the software to be executed by said main frame equipment for transmitting the movement data to said pseudo biological equipment.

24. An information processing apparatus comprising a main frame equipment, and a pseudo biological equipment performing a movement according to movement data, said pseudo biological equipment being connected to said main frame equipment through a cable or a radio,
wherein said main frame equipment has a movement control unit responsive to a connection of said pseudo biological equipment to said main frame equipment for transmitting the movement data to said pseudo biological equipment.

25. An information processing apparatus comprising a main frame equipment, and a pseudo biological equipment performing a movement according to movement data, said pseudo biological equipment being connected to said main frame equipment through a cable or a radio,
wherein said pseudo biological equipment performs a predetermined movement when disconnected from said main frame equipment.

26. An information processing apparatus comprising a main frame equipment having a handler for designating time, and a pseudo biological equipment performing a movement according to movement data, said pseudo biological equipment being connected to said main frame equipment through a cable or a radio,
wherein said main frame equipment has a movement control unit for transmitting the movement data to said pseudo biological equipment at the time designated by said handler.

27. An information processing apparatus comprising a main frame equipment having a handler for inputting schedules and designating a desired one of the inputted schedules, and a pseudo biological equipment performing a movement according to movement data, said pseudo biological equipment being connected to said main frame equipment through a cable or a radio,
wherein said main frame equipment has a movement control unit for transmitting the movement data to said pseudo biological equipment at the time associated with the designated schedule by said handler.

28. A pseudo biological equipment detachably coupled to a main frame equipment for performing a movement according to movement data, said pseudo biological equipment comprising:
a storage unit for storing movement data and condition data instructing condition to perform a movement based on the movement data, which data are transmitted from said main frame equipment;
a determining unit for determining based on the condition data as to whether the condition to perform a movement based on the movement data is formed; and
a driving unit for causing said pseudo biological equipment to perform a movement based on the movement data when it is decided that said determining unit that the condition to perform a movement based on the movement data is formed,
wherein said pseudo biological equipment is activated by an electric power of an internal battery.

29. A pseudo biological equipment detachably coupled to a main frame equipment for performing a movement according to movement data, said pseudo biological equipment comprising:
a plurality of types of communication units one of which is selectively connected to a main frame equipment for performing communications adopting mutually different communication schemes.

30. A pseudo biological equipment coupled to a main frame equipment for performing a movement according to movement data, said pseudo biological equipment comprising:
a driving source; and
buffer means disposed between said driving source and a portion in which change of a position or an attitude appears on an appearance.

31. A pseudo biological equipment coupled to a main frame equipment for performing a movement according to movement data, said pseudo biological equipment comprising:
a main frame portion;
a head portion supported by said main frame portion, said head portion returning to an original position when depressed; and
a sensor for detecting that said head portion is depressed.

32. A pseudo biological equipment coupled to a main frame equipment for performing a movement according to movement data, said pseudo biological equipment comprising:
a pedestal portion having a sensor for detecting operation.

33. A pseudo biological equipment coupled to a main frame equipment for performing a movement according to movement data, said pseudo biological equipment comprising:
a pedestal portion incorporating thereinto a control unit for controlling a movement of said pseudo biological equipment through a communication with said main frame equipment; and
a main frame portion detachably mounted on said pedestal portion for performing a movement according to an instruction issued from said control unit.

34. A pseudo biological equipment coupled to a main frame equipment for performing a movement according to movement data, said pseudo biological equipment comprising:
a driving unit for driving said pseudo biological equipment in accordance with movement data;
a battery unit for storing an electric power to be supplied to said driving unit; and
a charging unit for charging said battery unit with an electric power fed from said main frame equipment.

35. A pseudo biological equipment according to claim 34 wherein said charging unit charges said battery unit with an electric power on a communication line via which data is transmitted from said main frame equipment to said pseudo biological equipment.

36. A pseudo biological equipment according to claim 34 or 35 further comprising a boosting unit for boosting the electric power stored in said battery unit and supplying the boosted electric power to said driving unit.

37. A pseudo biological equipment according to claim 34, 35, or 36 further comprising a storage unit for storing a predetermined movement data, and a disconnection detecting unit for detecting that a connection with said main frame equipment is disconnected, and transmitting the movement data stored in said storage unit to said driving unit.

38. A pseudo biological equipment coupled to a main frame equipment for performing a movement according to movement data, said pseudo biological equipment comprising:
a control unit for producing a control signal to control a movement of said pseudo biological equipment through a communication with said main frame equipment, a circuit operation of said control unit being performed with electric power fed from said main frame equipment; and
a driving unit for driving said pseudo biological equipment in accordance with the control signal fed from said control unit, said driving unit being activated by electric power supplied from an internal battery.

39. A pseudo biological equipment coupled to a main frame equipment for performing a movement according to movement data, said pseudo biological equipment comprising:
a main frame portion;
a rocking shaft supported on said main frame portion horizontally;
a head portion supported on said rocking shaft, said head portion returning to an original position when depressed; and
a sensor having a push button depressed in accordance with a depression of said head portion, said push button returning to an original position when depressed, said sensor detecting that said push button is depressed,
wherein said rocking shaft is disposed right above said push button, and said push button is depressed by said rocking shaft when said head portion is depressed.

40. A pseudo biological equipment coupled to a main frame equipment for performing a movement according to movement data, said pseudo biological equipment comprising:
a main frame portion;
a rocking shaft supported on said main frame portion horizontally;
a head portion supported via a spring on said rocking shaft, said head portion returning to an original position when depressed; and
a sensor having a push button depressed in accordance with a depression of said head portion, said push button returning to an original position when depressed, said sensor detecting that said push button is depressed.

41. A pseudo biological equipment coupled to a main frame equipment for performing a movement according to movement data, said pseudo biological equipment comprising:
a main frame portion;
a rocking shaft having spring properties supported on said main frame portion horizontally;
a head portion fixed on said rocking shaft, said head portion returning to an original position when depressed; and
a sensor having a push button depressed in accordance with a depression of said head portion, said push button returning to an original position when depressed, said sensor detecting that said push button is depressed.

42. A pseudo biological equipment coupled to a main frame equipment for performing a movement according to movement data, said pseudo biological equipment comprising:
a main frame portion;
a head portion supported via a spring on said main frame portion; and
a pair of head driving mechanisms each having a lever supported on said main frame portion and extending vertically and a driving unit for rotatively moving said lever, said pair of head driving mechanisms being engaged with said head portion at upper portions of the levers to move the head portion,
wherein the head portion is inclined or is turned sideways according as both of said pair of head driving mechanisms are simultaneously activated or one of said pair of head driving mechanisms is activated.

43. A pseudo biological equipment coupled to a main frame equipment for performing a movement according to movement data, said pseudo biological equipment being operative on a digital basis such that the movement data represented by binary values according to pulse width is transmitted from said main frame equipment, said pseudo biological equipment comprising:
a flip-flop for storing the movement data; and
a decode circuit for supplying the movement data transmitted from said main frame equipment to said flip-flop, regardless of the pulse width, in the form of a clock instructing a timing to receive data into said flip-flop, and for processing the movement data transmitted from said main frame equipment so as to be received into said flip-flop in the form of a logic signal of logic level dependent on the pulse width and supplying the movement data thus processed to said flip-flop the form of data.

44. A pseudo biological equipment coupled to a main frame equipment for performing a movement according to movement data, said pseudo biological equipment comprising:
a sensor for detecting an operation for said pseudo biological equipment,
wherein said sensor comprises a switch disposed in series with a resistance between two status output lines for transmitting mutually different voltages outputted from said main frame equipment, wherein a status input line for transmitting a voltage signal to said main frame equipment is connected to a connection point with the resistance.

45. A pseudo biological equipment coupled to a main frame equipment for performing a movement according to movement data, said pseudo biological equipment comprising:
a main frame portion;
a head portion supported on said main frame portion having a gap between said head portion and said main frame portion, said head portion being movable with respect to said main frame portion and changing a color of its surface by color light emitted inside said head portion;
an emitter for irradiating a front of said head portion with color light inside said head portion; and
a shading member for preventing an irradiation of color light emitted from said emitter through the gap onto a surface of said main frame portion.

46. A pseudo biological equipment coupled to a main frame equipment for performing a movement according to movement data, said pseudo biological equipment comprising:
a main frame portion;
a head portion supported on said main frame portion having a gap between said head portion and said main frame portion, said head portion being movable with respect to said main frame portion and changing a color of its surface by color light emitted inside said head portion;
an emitter for irradiating a front of said head portion with color light inside said head portion; and
an emitter driving unit for supplying to said emitter an electric power pulse train of a duty ratio selected from a plurality of duty ratios.

47. Software which enables an information processing apparatus to have the features of any of claims 1 to 27.

48. Software adapted to control pseudo-biological equipment according to any of claims 28 to 46.
